# EUROPEAN PATENT APPLICATION

(11) **EP 4 447 432 A1**
(43) Date of publication of application: **16.10.2024**
(21) Application number: 24162068.1
(22) Date of filing: 07.03.2024
(51) Int. Cl.: H04N 7/15, A63F 13/215, G06F 3/01, G06F 3/16, G06V 20/20, H04R 1/10, H04S 7/00, A63F 13/424

(54) **SYNCHRONIZING VIDEO OF AN AVATAR WITH LOCALLY CAPTURED AUDIO FROM A USER CORRESPONDING TO THE AVATAR**

(30) Priority: 13.04.2023 US 202318134453
(71) Applicant: Meta Platforms Technologies, LLC, Menlo Park, CA 94025 (US)
(72) Inventor: Ivanov, Plamen Alexandrov, Menlo Park, 94025 (US); Kelloniemi, Antti, Menlo Park, 94025 (US)
(74) Representative: Murgitroyd & Company

(57) **Abstract**

A local area includes multiple users each using a headset to communicate with other users in the local area, as well as with additional users in a remote area. The headset includes one or more acoustic sensors, a transducer array, one or more external capturing sensors (e.g., cameras) capturing information describing the local area. A headset of a user in the local area local detects audio from an additional user in the local area. In response to detecting the audio, an avatar representing the additional user that is displayed by the user's headset is modified to appear to be synchronized with the audio from the additional user that is heard by the user. Additionally, each headset provides respective face tracking through one or more internal imaging devices that is provided with and captured audio to a server which provides the information users in the remote area.

## Description

### Technical Field

This disclosure relates generally to artificial reality systems, and more specifically to synchronizing generated video of an avatar with audio captured from a user corresponding to the avatar from within a local area.

### Background

Users increasingly communicate with each other using Virtual reality (VR) and augmented reality (AR) devices. The VR devices or AR devices allow for new modes of communication between users that simplifies interactions between users in different locations. Further, VR devices or AR devices allows improvement of conventional modes of communication between users to be improved. For example, a teleconference between users in different locations may use VR devices or AR devices that allow a user in a location to view and interact with an avatar of a user in a remote location through a virtual environment, rather than view a video of the user in the remote location in a conventional videoconference. Use of avatars to represent users in different locations allows for a broader range of interaction between users in different locations, increasing interaction between the users.

In certain teleconferencing scenarios, multiple users in a location communicate with another set of users in a different location. For example, a group of users are in a room and communicate via a teleconference with an additional group of users in a room that is in a different physical location. Users in each location are wearing a VR device or an AR device, with a user's VR or AR device displaying avatars of other users participating in the teleconference. An avatar of a user is updated to reflect movement (e.g., facial expressions, lip movement) of the user and displayed to other users through their VR device or AR device, allowing the avatar to simulate the user speaking.

Conventionally, an AR device or a VR device of a user who is speaking captures the audio from the user and transmits the audio to a server or to other VR devices or AR devices for presentation to other users. However, in such implementations, a user in a location may hear audio from an additional user in the same location before an avatar representing the additional user is updated based on the audio. Delays from an AR device or a VR device transmitting captured audio from a user in the location speaking and VR devices or AR devices of other users in the location receiving the audio to update an avatar of the user who is speaking causes the avatar to be updated after users in same location as the speaking user hear the audio from then user within the location. Such lack of synchronization between movement of an avatar for a user in a location and detection of audio from the user by other users in the same location may distract the other users and reduce a frequency with which the other users communicate with groups of users via an AR device or a VR device.

### Summary

A user in a local area has a headset that is used to exchange audio or other data with other users in the local area, as well as one or more users in a remote area that is a different physical location than the local area. The user's headset displays avatars of other users to the user and modifies the avatars based on audio generated by the other users. To decrease latency between the headset of the user updating an avatar of an additional user in the local area and the user of the headset hearing the audio within the local area, the headset of the user captures audio from the local area, or other information describing the local area, and extracts characteristics from the captured audio or other information. From the extracted characteristics, the headset of the user identifies an additional user in the local area generating audio and updates an avatar of the identified additional user that is displayed to the user based on the captured audio from the local area. This allows the headset to modify the avatar of the additional user based on audio within the local area, using information from the local area, rather than obtained from the headset of the additional user generating audio, to update the avatar of the additional user.

To modify an avatar of an additional user, a headset of a user identifies an additional headset of the additional user within a local area including the headset. For example, the headset receives metadata from the additional headset identifying the additional headset and the additional user. Alternatively, the headset extracts an identifier of the additional headset from one or more images of the local area. One or more acoustic sensors of the headset capture audio from the local area, and the headset determines one or more characteristics of the captured audio. Based on the characteristics of the captured audio, the headset determines the captured audio is associated with the additional user. For example, the headset determines the captured audio originates from a location within a threshold distance of a location of the additional headset or determines that characteristics of the audio are associated with a user identifier of the additional user. In response to determining the captured audio is associated with the additional user, the headset identifies an avatar corresponding to the additional user in a virtual environment displayed by the headset. The headset modifies the avatar corresponding to the additional user based on the captured audio, updating the virtual environment to reflect the captured audio.

According to a first aspect, there is provided a method comprising: identifying, by a headset of a user, an additional headset of an additional user within a local area including the headset; capturing audio from the local area by an audio system of the headset; determining one or more characteristics of the captured audio by the headset; determining the captured audio is associated with the additional user based on the one or more characteristics of the captured audio; identifying an avatar corresponding to the additional user in a virtual environment displayed by the headset to the user; and modifying the avatar corresponding to the additional user based on the captured audio.

Determining one or more characteristics of the captured audio by the headset may comprise determining a direction of arrival of the captured audio.

Determining the captured audio is associated with the additional user based on the one or more characteristics of the captured audio may comprise determining the direction of arrival of the captured audio is within a threshold distance of a location of the additional headset in the local area.

The location of the additional headset in the local area may be determined from metadata the headset receives from the additional headset.

Determining one or more characteristics of the captured audio by the headset may comprise applying a trained identification model to the captured audio. The trained identification model may determine a user identifier for the captured audio.

Determining the captured audio is associated with the additional user based on the one or more characteristics of the captured audio may comprise determining the user identifier for the captured audio matches a user identifier of the additional user.

The user identifier of the additional user may be included in metadata the headset receives from the additional headset.

According to a second aspect, there is provided a method comprising: identifying, by a headset of a user, an additional headset of an additional user within a local area including the headset; capturing audio from the local area by an audio system of the headset; capturing information describing the local area by one or more external capturing sensors included in local area; extracting characteristics of the additional user from the information describing the local area; identifying an avatar corresponding to the additional user in a virtual environment displayed by the headset to the user; and modifying the avatar corresponding to the additional user based on the extracted characteristics of the additional user and the captured audio.

Capturing information describing the local area by one or more external capturing sensors included in local area may comprise capturing video of the local area including the additional user from one or more cameras included in the headset.

Extracting characteristics of the additional user from the information describing the local area may comprise: identifying the additional user in the captured video; and determining a facial expression of the additional user from the captured video.

Modifying the avatar corresponding to the additional user based on the extracted characteristics of the additional user and the captured audio may comprise modifying the avatar corresponding to the additional user to replicate the facial expression of the additional user determined from the captured video.

Capturing information describing the local area by one or more external capturing sensors included in local area may comprise capturing video of the local area including the additional user by one or more cameras included in the local area and external to the headset of the user.

Extracting characteristics of the additional user from the information describing the local area may comprise: determining the additional user is included in the captured video; and determining a facial expression of the additional user from the captured video.

An external capturing sensor may be selected from a group consisting of: a camera included on the headset, a depth camera assembly included on the headset, an ultrasonic sensor included on the headset, an infrared sensor included on the headset, and any combination thereof.

An external capturing sensor may be selected from a group consisting of: a camera external to headset, a depth camera assembly external to the headset, an ultrasonic sensor external to the headset, an infrared sensor external to the headset, one or more acoustic sensors external to the headset, and any combination thereof.

According to a third aspect, there is provided a headset comprising: a frame; one or more display elements coupled to the frame, each display element configured to generate image light displaying one or more avatars of other users to a user; one or more acoustic sensors arranged to capture audio from a local area surrounding the headset; and an audio controller including a processor and a computer readable storage medium having instructions encoded thereon that, when executed by the processor, cause the processor to carry out the method of the first or second aspect. The medium may be non-transitory.

The headset may communicate with the additional headset through a local communication channel. The headset may communicate with one or more remote devices through a different communication channel. The local communication channel may have a lower latency than the different communication channel.

### Brief Description of the Drawings

FIG. 1A is a perspective view of a headset implemented as an eyewear device.
FIG. 1B is a perspective view of a headset implemented as a head-mounted display.
FIG. 2 is a block diagram of an audio system.
FIG. 3 is an example virtual environment displayed to a user by a headset.
FIG. 4 is a flowchart of a method for updating an avatar of an additional user in a local area including a user based on audio the user's headset captured from the local area.
FIG. 5 is a process flow diagram of a method for updating an avatar of an additional user in a local area including a user based on audio the user's headset captured from the local area.
FIG. 6 is a flowchart of a method for a user's headset updating an avatar of an additional user in a local area including a user based on information about the local area obtained by the user's headset.
FIG. 7 is a process flow diagram of a method for a user's headset updating an avatar of an additional user in a local area including a user based on information about the local area captured by the user's headset.
FIG. 8 is a system that includes a headset.

The figures depict various examples for purposes of illustration only. One skilled in the art will readily recognize from the following discussion that alternative examples of the structures and methods illustrated herein may be employed without departing from the principles described herein.

### Detailed Description

A user wears a headset that is a virtual reality (VR) device or is an artificial reality (AR) device. The headset displays avatars representing additional users to the user and presents audio obtained from the additional users to the user. At least some additional users may be in a local area along with the user wearing the headset. In some examples, other additional users are in a remote area that is a physically different location than the local area. Conventionally, a headset of an additional user who is speaking captures the audio from the additional user and transmits the audio to a server or to a headset of the user, which updates the avatar of the additional user based on the audio and presents the audio from the additional user to the user through one or more speakers or transducers. However, in such configurations, the user hears audio from an additional user in the local area before the user's headset receives instructions for modifying the avatar of the additional user. This delay between the user hearing audio from the additional user in the local area and the user's headset updating the avatar causes lack of synchronization between movement of the additional user's avatar and the user hearing the audio from the additional user in the local area.

To increase synchronization between movement of an avatar of an additional user who is in a common local area as the user to whom the avatar is presented and audio from the additional user that the user hears in the local area, the user's headset identifies additional headsets for additional users that are in the local area. For example, the user's headset receives metadata from the additional headsets including identifiers of the additional headsets or extracts identifiers of additional headsets from images or video of the additional headsets. Metadata from an additional headset or information determined from images or video of the additional headset includes a user identifier of an additional user associated with the additional headset, allowing the user's headset to identify additional users associated with the additional headsets in the local area.

Additionally, the user's headset captures audio from the local area through one or more acoustic sensors. Alternatively or additionally, one or more external capturing sensors capture information describing the local area that is provided to the user's headset. For example, an external capturing sensor is an imaging device capturing video of the local area. The user's headset extracts characteristics of the captured audio or characteristics of the information describing the local area. As an example, the user's headset determines a directional of arrival of the captured audio to the user's headset or the user's headset identifies an additional user or movement of an additional user in captured video of the local area. From the extracted characteristics, the user's headset determines whether the captured audio is associated with an additional user in the local area. For example, the user's headset determines the direction of arrival of captured audio is within a threshold distance of a location of an additional headset in the local area and determines the captured audio is associated with an additional user associated with the additional headset. As another example, the user's headset identifies an additional user in video of the local area and detects movement of the identified additional user while the audio is captured and, so the user's headset determines the captured audio is associated with the identified additional user.

The user's headset modifies the avatar corresponding to the identified additional user based on the captured audio from the local area. In various examples, the user's headset modifies the avatar corresponding to the identified additional user to replicate movement of the additional user that results in the captured audio. In examples where the user's headset obtains information describing the local area, the user's headset determines movement of the additional user from the information describing the local area and modifies the avatar corresponding to the additional user to replicate the determined movement. In other examples, the user's headset applies one or more models to the captured audio to determine modifications to the avatar corresponding to the additional user based on the captured audio. This allows the user's headset to update an avatar of an additional user in the local area from whom audio is captured based on the audio captured from the local area, rather than based on audio or other instructions received from the additional user's headset or from a server. This decreases a delay between the user hearing audio in the local area and the user's headset updating an avatar corresponding to an additional user also in the local area.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, any of which may be presented in a single channel or in multiple channels (such as stereo video that produces a three-dimensional effect to the viewer). Additionally, In some examples, artificial reality may also be associated with applications, products, accessories, services, or some combination thereof, that are used to create content in an artificial reality and/or are otherwise used in an artificial reality. The artificial reality system that provides the artificial reality content may be implemented on various platforms, including a wearable device (e.g., headset) connected to a host computer system, a standalone wearable device (e.g., headset), a mobile device or computing system, or any other hardware platform capable of providing artificial reality content to one or more viewers.

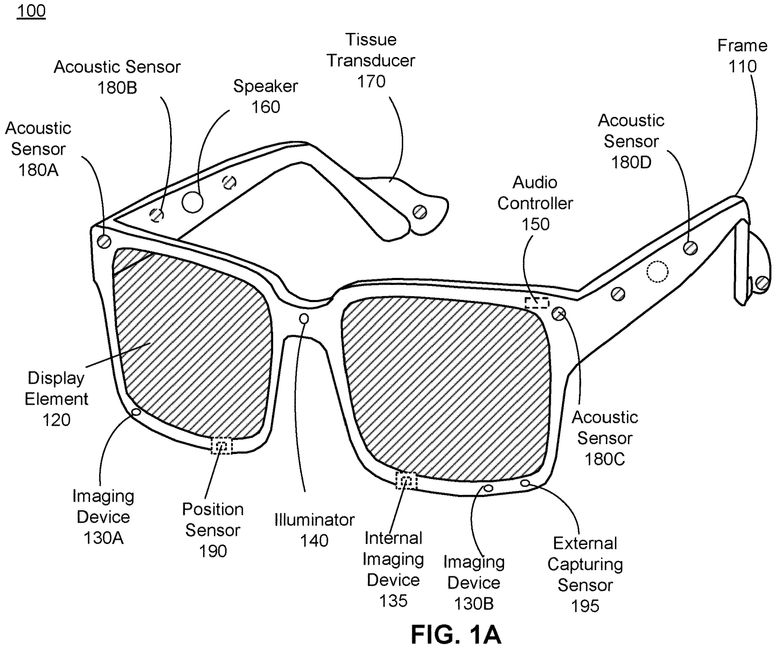

FIG. 1A is a perspective view of a headset 100 implemented as an eyewear device. In some examples, the eyewear device is a near eye display (NED). In general, the headset 100 may be worn on the face of a user such that content (e.g., media content) is presented using a display assembly and/or an audio system. However, the headset 100 may also be used such that media content is presented to a user in a different manner. Examples of media content presented by the headset 100 include one or more images, video, audio, or some combination thereof. The headset 100 includes a frame, and may include, among other components, a display assembly including one or more display elements 120, a depth camera assembly (DCA), an audio system, and a position sensor 190. While FIG. 1A illustrates the components of the headset 100 in example locations on the headset 100, the components may be located elsewhere on the headset 100, on a peripheral device paired with the headset 100, or some combination thereof. Similarly, there may be more or fewer components on the headset 100 than what is shown in FIG. 1A.

The frame 110 holds the other components of the headset 100. The frame 110 includes a front part that holds the one or more display elements 120 and end pieces (e.g., temples) to attach to a head of the user. The front part of the frame 110 bridges the top of a nose of the user. The length of the end pieces may be adjustable (e.g., adjustable temple length) to fit different users. The end pieces may also include a portion that curls behind the ear of the user (e.g., temple tip, ear piece).

The one or more display elements 120 provide light to a user wearing the headset 100. As illustrated the headset includes a display element 120 for each eye of a user. In some examples, a display element 120 generates image light that is provided to an eyebox of the headset 100. The eyebox is a location in space that an eye of user occupies while wearing the headset 100. For example, a display element 120 may be a waveguide display. A waveguide display includes a light source (e.g., a two-dimensional source, one or more line sources, one or more point sources, etc.) and one or more waveguides. Light from the light source is in-coupled into the one or more waveguides which outputs the light in a manner such that there is pupil replication in an eyebox of the headset 100. In-coupling and/or outcoupling of light from the one or more waveguides may be done using one or more diffraction gratings. In some examples, the waveguide display includes a scanning element (e.g., waveguide, mirror, etc.) that scans light from the light source as it is in-coupled into the one or more waveguides. Note that In some examples, one or both of the display elements 120 are opaque and do not transmit light from a local area around the headset 100. The local area is the area surrounding the headset 100. For example, the local area may be a room that a user wearing the headset 100 is inside, or the user wearing the headset 100 may be outside and the local area is an outside area. In this context, the headset 100 generates VR content. Alternatively, In some examples, one or both of the display elements 120 are at least partially transparent, such that light from the local area may be combined with light from the one or more display elements to produce AR and/or MR content.

In some examples, a display element 120 does not generate image light, and instead is a lens that transmits light from the local area to the eyebox. For example, one or both of the display elements 120 may be a lens without correction (non-prescription) or a prescription lens (e.g., single vision, bifocal and trifocal, or progressive) to help correct for defects in a user's eyesight. In some examples, the display element 120 may be polarized and/or tinted to protect the user's eyes from the sun.

In some examples, the display element 120 may include an additional optics block (not shown). The optics block may include one or more optical elements (e.g., lens, Fresnel lens, etc.) that direct light from the display element 120 to the eyebox. The optics block may, e.g., correct for aberrations in some or all of the image content, magnify some or all of the image, or some combination thereof.

The DCA determines depth information for a portion of a local area surrounding the headset 100. The DCA includes one or more imaging devices 130A, 130B (collectively referred to as 130) and a DCA controller (not shown in FIG. 1A), and may also include an illuminator 140. In some examples, the illuminator 140 illuminates a portion of the local area with light. The light may be, e.g., structured light (e.g., dot pattern, bars, etc.) in the infrared (IR), IR flash for time-of-flight, etc. In some examples, the one or more imaging devices 130 capture images of the portion of the local area that include the light from the illuminator 140. As illustrated, FIG. 1A shows a single illuminator 140 and two imaging devices 130. In alternate examples, there is no illuminator 140 and at least two imaging devices 130.

The DCA controller computes depth information for the portion of the local area using the captured images and one or more depth determination techniques. The depth determination technique may be, e.g., direct time-of-flight (ToF) depth sensing, indirect ToF depth sensing, structured light, passive stereo analysis, active stereo analysis (uses texture added to the scene by light from the illuminator 140), some other technique to determine depth of a scene, or some combination thereof.

Additionally, the headset 100 includes one or more internal imaging devices 135. An internal imaging device 135 is positioned so a field of view of the internal imaging device 135 includes one or more portions of a user's face when the user wears the headset 100. For example, an internal imaging device 135 captures video including the user's lips or mouth. The headset 100 includes multiple internal imaging devices 135 with different fields of view In some examples, so different internal imaging devices 135 capture different portions of the user's face when the user wears the headset 100. In various examples, video captured by one or more internal imaging devices 135 is communicated to a server or another headset 100 to modify an avatar of the user wearing the headset 100 to replicate movement of the user's face while wearing the headset 100.

The audio system provides audio content. The audio system includes a transducer array, a sensor array, and an audio controller 150. However, in other examples, the audio system may include different and/or additional components. Similarly, in some cases, functionality described with reference to the components of the audio system can be distributed among the components in a different manner than is described here. For example, some or all of the functions of the controller may be performed by a remote server.

The transducer array presents sound to the user. The transducer array includes a plurality of transducers. A transducer may be a speaker 160 or a tissue transducer 170 (e.g., a bone conduction transducer or a cartilage conduction transducer). Although the speakers 160 are shown exterior to the frame 110, the speakers 160 may be enclosed in the frame 110. In some examples, instead of individual speakers for each ear, the headset 100 includes a speaker array comprising multiple speakers integrated into the frame 110 to improve directionality of presented audio content. The tissue transducer 170 couples to the head of the user and directly vibrates tissue (e.g., bone or cartilage) of the user to generate sound. The number and/or locations of transducers may be different from what is shown in FIG. 1A.

The sensor array detects sounds within the local area of the headset 100. The sensor array includes a plurality of acoustic sensors 180A, 180B, 180C, 180D (collectively referred to as 180). An acoustic sensor 180A captures sounds emitted from one or more sound sources in the local area (e.g., a room). Each acoustic sensor is configured to detect sound and convert the detected sound into an electronic format (analog or digital). The acoustic sensors 180 may be acoustic wave sensors, microphones, sound transducers, or similar sensors that are suitable for detecting sounds.

In some examples, one or more acoustic sensors 180 may be placed in an ear canal of each ear (e.g., acting as binaural microphones). In some examples, the acoustic sensors 180 may be placed on an exterior surface of the headset 100, placed on an interior surface of the headset 100, separate from the headset 100 (e.g., part of some other device), or some combination thereof. The number and/or locations of acoustic sensors 180 may be different from what is shown in FIG. 1A. For example, the number of acoustic detection locations may be increased to increase the amount of audio information collected and the sensitivity and/or accuracy of the information. The acoustic detection locations may be oriented such that the microphone is able to detect sounds in a wide range of directions surrounding the user wearing the headset 100.

The audio controller 150 processes information from the sensor array that describes sounds detected by the sensor array. The audio controller 150 may comprise a processor and a computer-readable storage medium. The audio controller 150 may be configured to generate direction of arrival (DOA) estimates, generate acoustic transfer functions (e.g., array transfer functions and/or head-related transfer functions), track the location of sound sources, form beams in the direction of sound sources, classify sound sources, generate sound filters for the speakers 160, or some combination thereof.

The position sensor 190 generates one or more measurement signals in response to motion of the headset 100. The position sensor 190 may be located on a portion of the frame 110 of the headset 100. The position sensor 190 may include an inertial measurement unit (IMU). Examples of position sensor 190 include: one or more accelerometers, one or more gyroscopes, one or more magnetometers, another suitable type of sensor that detects motion, a type of sensor used for error correction of the IMU, or some combination thereof. The position sensor 190 may be located external to the IMU, internal to the IMU, or some combination thereof.

In some examples, the headset 100 may provide for simultaneous localization and mapping (SLAM) for a position of the headset 100 and updating of a model of the local area. For example, the headset 100 may include a passive camera assembly (PCA) that generates color image data. The PCA may include one or more RGB cameras that capture images of some or all of the local area. In some examples, some or all of the imaging devices 130 of the DCA may also function as the PCA. The images captured by the PCA and the depth information determined by the DCA may be used to determine parameters of the local area, generate a model of the local area, update a model of the local area, or some combination thereof. Furthermore, the position sensor 190 tracks the position (e.g., location and pose) of the headset 100 within the room.

In various examples, the headset 100 includes one or more external capturing sensors 195. An external capturing sensor 195 is configured to capture information describing a local area surrounding the headset 100. The imaging device 130, further described above, is a type of external capturing sensor 195 in various examples. The DCA or PCA further described above are other examples of an external capturing sensor 195. In other examples, an external capturing sensor 195 is an ultrasonic sensor using transmission of ultrasonic waves and detection of reflected ultrasonic waves to detect or to locate objects in the local area. As another example, an external capturing sensor 195 is an infrared sensor that emits infrared light and captures reflected infrared light to detect or to locate objects in the local area. Other types of sensors configured to capture data detecting or describing objects in the local area may be additionally or alternatively used as external capturing sensors 195. In various examples, the headset 100 includes multiple external capturing sensors 195, and may include different types of external capturing sensors 195. Different external capturing sensors 195 have different fields of view In some examples, so different external capturing sensors 195 capture information describing different regions of the local area including the headset 100.

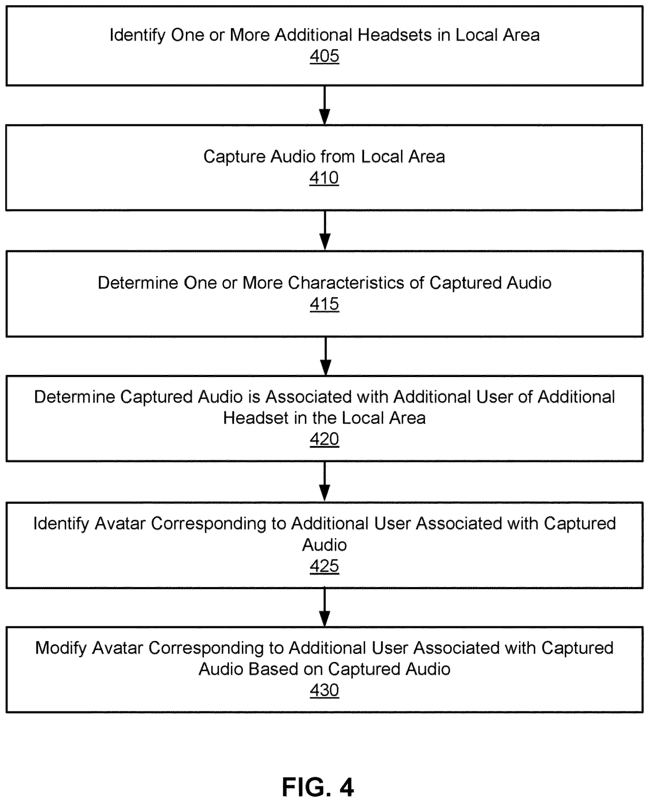

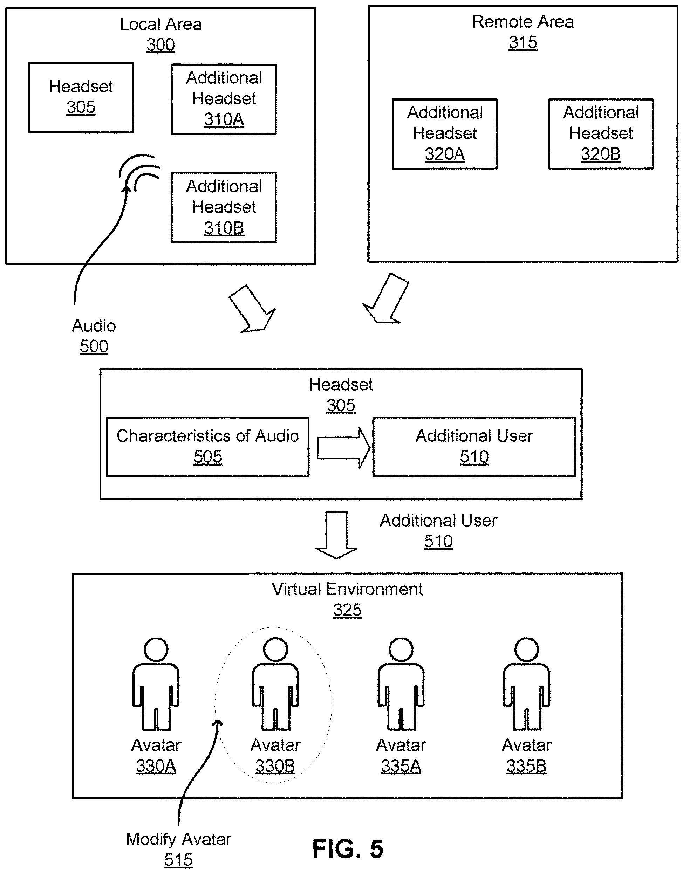

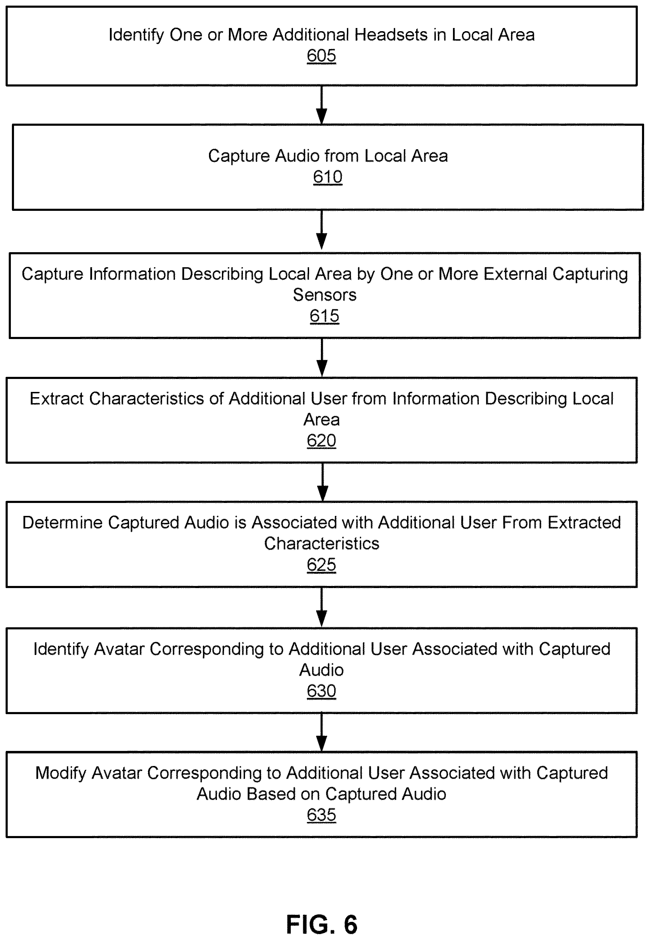

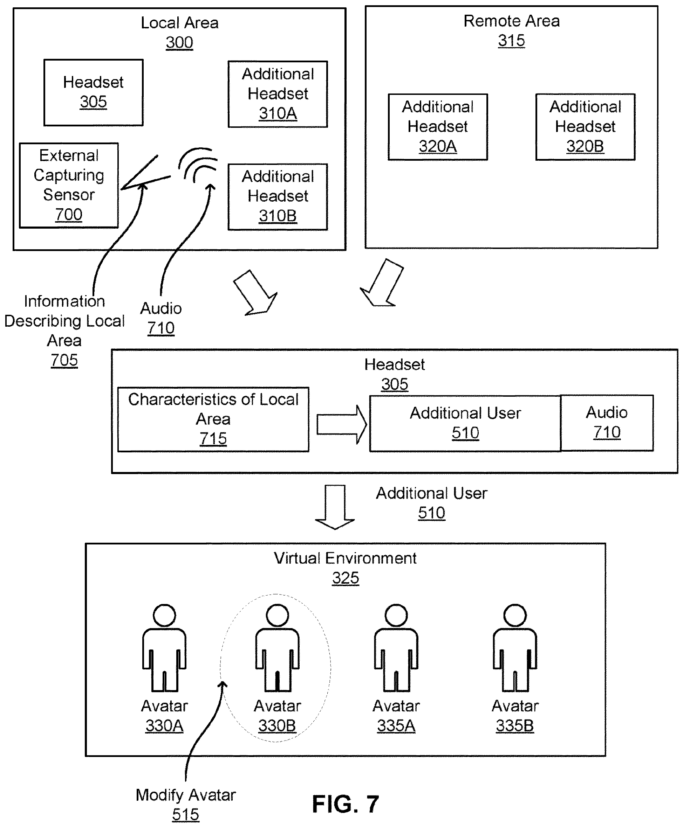

When the headset 100 is worn by a user in a local area including one or more additional headsets 100, the audio controller 150 determines whether audio captured by one or more acoustic sensors 180 originated from an additional user of an additional headset 100, a further described below in conjunction with FIGS. 4-7. As further described below in conjunction with FIGS. 4 and 5, the audio controller 150 extracts characteristics of audio captured by one or more acoustic sensors 180 and uses the extracted characteristics to determine whether the captured audio originates from an additional user of an additional headset 100 in the local area with the user. For example, the audio controller 150 determines whether a direction of arrival of audio captured by one or more acoustic sensors n180 matches a direction of an additional headset 100. Alternatively or additionally, the audio controller 150 may use information from one more external capturing sensors 195 when determining whether captured audio is from an additional user of an additional headset 100 in the local area, as further described below in conjunction with FIGS. 6 and 7. For example, the audio controller 150 obtains data from one or more external capturing sensors 195 and determines whether data captured by an external capturing sensor 195 includes an additional user wearing an additional headset 100 and includes movement of the additional user when the one or more acoustic sensors 180 captured audio data . As further described below in conjunction with FIGS. 4-7, in response to determining the local area includes a user wearing an additional headset 100, the audio controller 150 generates instructions for updating an avatar corresponding to the additional user displayed by the one or more display elements 120 based on the captured audio. For example, the instructions update movement of the avatar to appear synchronized with the captured audio.

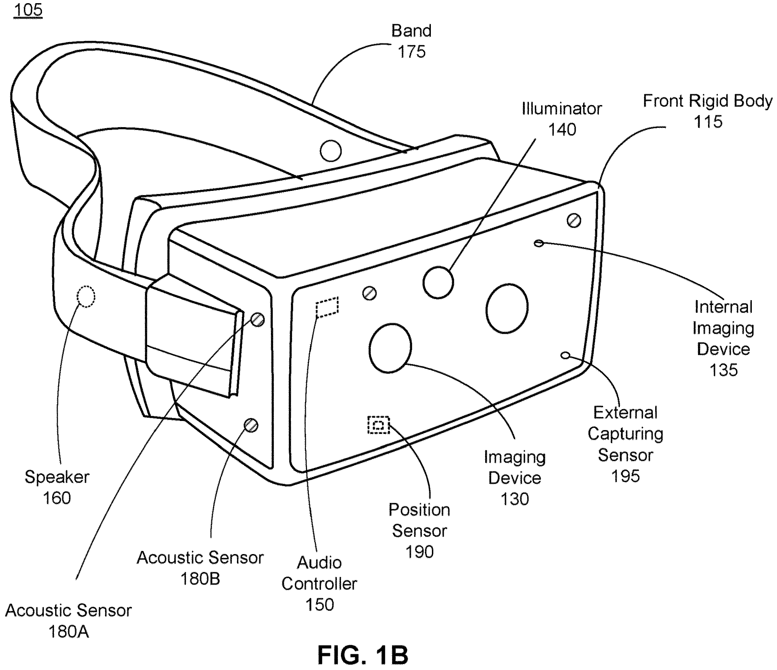

FIG. 1B is a perspective view of a headset 105 implemented as a HMD. In examples that describe an AR system and/or a MR system, portions of a front side of the HMD are at least partially transparent in the visible band (~380 nm to 750 nm), and portions of the HMD that are between the front side of the HMD and an eye of the user are at least partially transparent (e.g., a partially transparent electronic display). The HMD includes a front rigid body 115 and a band 175. The headset 105 includes many of the same components described above with reference to FIG. 1A, but modified to integrate with the HMD form factor. For example, the HMD includes a display assembly, a DCA, an audio system, and a position sensor 190. Additionally, the HMD includes one or more external capturing sensors 195 or one or more internal imaging devices 135, as further described above in conjunction with FIG. 1A. FIG. 1B shows the illuminator 140, a plurality of the speakers 160, a plurality of the imaging devices 130, a plurality of acoustic sensors 180, and the position sensor 190. The speakers 160 may be located in various locations, such as coupled to the band 175 (as shown), coupled to front rigid body 115, or may be configured to be inserted within the ear canal of a user.

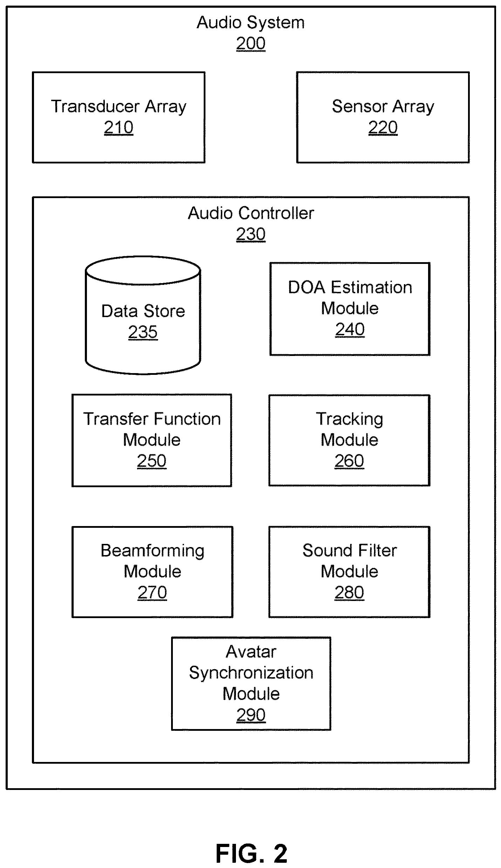

FIG. 2 is a block diagram of an audio system 200. The audio system in FIG. 1A or FIG. 1B may be an example of the audio system 200. The audio system 200 generates one or more acoustic transfer functions for a user. The audio system 200 may then use the one or more acoustic transfer functions to generate audio content for the user. In the example of FIG. 2, the audio system 200 includes a transducer array 210, a sensor array 220, and an audio controller 230. Some examples of the audio system 200 have different components than those described here. Similarly, in some cases, functions can be distributed among the components in a different manner than is described here.

The transducer array 210 is configured to present audio content. The transducer array 210 includes a plurality of transducers. A transducer is a device that provides audio content. A transducer may be, e.g., a speaker (e.g., the speaker 160), a tissue transducer (e.g., the tissue transducer 170), some other device that provides audio content, or some combination thereof. A tissue transducer may be configured to function as a bone conduction transducer or a cartilage conduction transducer. The transducer array 210 may present audio content via air conduction (e.g., via one or more speakers), via bone conduction (via one or more bone conduction transducer), via cartilage conduction audio system (via one or more cartilage conduction transducers), or some combination thereof. In some examples, the transducer array 210 may include one or more transducers to cover different parts of a frequency range. For example, a piezoelectric transducer may be used to cover a first part of a frequency range and a moving coil transducer may be used to cover a second part of a frequency range.

The bone conduction transducers generate acoustic pressure waves by vibrating bone/tissue in the user's head. A bone conduction transducer may be coupled to a portion of a headset, and may be configured to be behind the auricle coupled to a portion of the user's skull. The bone conduction transducer receives vibration instructions from the audio controller 230, and vibrates a portion of the user's skull based on the received instructions. The vibrations from the bone conduction transducer generate a tissue-borne acoustic pressure wave that propagates toward the user's cochlea, bypassing the eardrum.

The cartilage conduction transducers generate acoustic pressure waves by vibrating one or more portions of the auricular cartilage of the ears of the user. A cartilage conduction transducer may be coupled to a portion of a headset, and may be configured to be coupled to one or more portions of the auricular cartilage of the ear. For example, the cartilage conduction transducer may couple to the back of an auricle of the ear of the user. The cartilage conduction transducer may be located anywhere along the auricular cartilage around the outer ear (e.g., the pinna, the tragus, some other portion of the auricular cartilage, or some combination thereof). Vibrating the one or more portions of auricular cartilage may generate: airborne acoustic pressure waves outside the ear canal; tissue born acoustic pressure waves that cause some portions of the ear canal to vibrate thereby generating an airborne acoustic pressure wave within the ear canal; or some combination thereof. The generated airborne acoustic pressure waves propagate down the ear canal toward the ear drum.

The transducer array 210 generates audio content in accordance with instructions from the audio controller 230. In some examples, the audio content is spatialized. Spatialized audio content is audio content that appears to originate from a particular direction and/or target region (e.g., an object in the local area and/or a virtual object). For example, spatialized audio content can make it appear that sound is originating from a virtual singer across a room from a user of the audio system 200. The transducer array 210 may be coupled to a wearable device (e.g., the headset 100 or the headset 105). In alternate examples, the transducer array 210 may be a plurality of speakers that are separate from the wearable device (e.g., coupled to an external console).

The sensor array 220 detects sounds within a local area surrounding the sensor array 220. The sensor array 220 may include a plurality of acoustic sensors that each detect air pressure variations of a sound wave and convert the detected sounds into an electronic format (analog or digital). The plurality of acoustic sensors may be positioned on a headset (e.g., headset 100 and/or the headset 105), on a user (e.g., in an ear canal of the user), on a neckband, or some combination thereof. An acoustic sensor may be, e.g., a microphone, a vibration sensor, an accelerometer, or any combination thereof. In some examples, the sensor array 220 is configured to monitor the audio content generated by the transducer array 210 using at least some of the plurality of acoustic sensors. Increasing the number of sensors may improve the accuracy of information (e.g., directionality) describing a sound field produced by the transducer array 210 and/or sound from the local area.

The audio controller 230 controls operation of the audio system 200. In the example of FIG. 2, the audio controller 230 includes a data store 235, a DOA estimation module 240, a transfer function module 250, a tracking module 260, a beamforming module 270, and a sound filter module 280. The audio controller 230 may be located inside a headset, in some examples. Some examples of the audio controller 230 have different components than those described here. Similarly, functions can be distributed among the components in different manners than described here. For example, some functions of the audio controller 230 may be performed external to the headset. The user may opt in to allow the audio controller 230 to transmit data captured by the headset to systems external to the headset, and the user may select privacy settings controlling access to any such data.

The data store 235 stores data for use by the audio system 200. Data in the data store 235 may include sounds recorded in the local area of the audio system 200, audio content, head-related transfer functions (HRTFs), transfer functions for one or more sensors, array transfer functions (ATFs) for one or more of the acoustic sensors, sound source locations, virtual model of local area, direction of arrival estimates, sound filters, and other data relevant for use by the audio system 200, or any combination thereof. In some examples, the data store 235 includes associations between identifiers of additional headsets 100 included in a local area with a headset of a user 100 and corresponding user identifiers of additional users associated with additional headsets 100. The data store 235 may obtain an identifier of an additional headset 100 and a user identifier of a corresponding additional user of the additional headset 100 from metadata received from the additional headset 100 or obtained from images or other data captured from the additional headset 100.

The DOA estimation module 240 is configured to localize sound sources in the local area based in part on information from the sensor array 220. Localization is a process of determining where sound sources are located relative to the user of the audio system 200. The DOA estimation module 240 performs a DOA analysis to localize one or more sound sources within the local area. The DOA analysis may include analyzing the intensity, spectra, and/or arrival time of each sound at the sensor array 220 to determine the direction from which the sounds originated. In some cases, the DOA analysis may include any suitable algorithm for analyzing a surrounding acoustic environment in which the audio system 200 is located.

For example, the DOA analysis may be designed to receive input signals from the sensor array 220 and apply digital signal processing algorithms to the input signals to estimate a direction of arrival. These algorithms may include, for example, delay and sum algorithms where the input signal is sampled, and the resulting weighted and delayed versions of the sampled signal are averaged together to determine a DOA. A least mean squared (LMS) algorithm may also be implemented to create an adaptive filter. This adaptive filter may then be used to identify differences in signal intensity, for example, or differences in time of arrival. These differences may then be used to estimate the DOA. In another example, the DOA may be determined by converting the input signals into the frequency domain and selecting specific bins within the time-frequency (TF) domain to process. Each selected TF bin may be processed to determine whether that bin includes a portion of the audio spectrum with a direct path audio signal. Those bins having a portion of the direct-path signal may then be analyzed to identify the angle at which the sensor array 220 received the direct-path audio signal. The determined angle may then be used to identify the DOA for the received input signal. Other algorithms not listed above may also be used alone or in combination with the above algorithms to determine DOA.

In some examples, the DOA estimation module 240 may also determine the DOA with respect to an absolute position of the audio system 200 within the local area. The position of the sensor array 220 may be received from an external system (e.g., some other component of a headset, an artificial reality console, a mapping server, a position sensor (e.g., the position sensor 190), etc.). The external system may create a virtual model of the local area, in which the local area and the position of the audio system 200 are mapped. The received position information may include a location and/or an orientation of some or all of the audio system 200 (e.g., of the sensor array 220). The DOA estimation module 240 may update the estimated DOA based on the received position information.

The transfer function module 250 is configured to generate one or more acoustic transfer functions. Generally, a transfer function is a mathematical function giving a corresponding output value for each possible input value. Based on parameters of the detected sounds, the transfer function module 250 generates one or more acoustic transfer functions associated with the audio system. The acoustic transfer functions may be array transfer functions (ATFs), head-related transfer functions (HRTFs), other types of acoustic transfer functions, or some combination thereof. An ATF characterizes how the microphone receives a sound from a point in space.

An ATF includes a number of transfer functions that characterize a relationship between the sound source and the corresponding sound received by the acoustic sensors in the sensor array 220. Accordingly, for a sound source there is a corresponding transfer function for each of the acoustic sensors in the sensor array 220. And collectively the set of transfer functions is referred to as an ATF. Accordingly, for each sound source there is a corresponding ATF. Note that the sound source may be, e.g., someone or something generating sound in the local area, the user, or one or more transducers of the transducer array 210. The ATF for a particular sound source location relative to the sensor array 220 may differ from user to user due to a person's anatomy (e.g., ear shape, shoulders, etc.) that affects the sound as it travels to the person's ears. Accordingly, the ATFs of the sensor array 220 are personalized for each user of the audio system 200.

In some examples, the transfer function module 250 determines one or more HRTFs for a user of the audio system 200. The HRTF characterizes how an ear receives a sound from a point in space. The HRTF for a particular source location relative to a person is unique to each ear of the person (and is unique to the person) due to the person's anatomy (e.g., ear shape, shoulders, etc.) that affects the sound as it travels to the person's ears. In some examples, the transfer function module 250 may determine HRTFs for the user using a calibration process. In some examples, the transfer function module 250 may provide information about the user to a remote system. The user may adjust privacy settings to allow or prevent the transfer function module 250 from providing the information about the user to any remote systems. The remote system determines a set of HRTFs that are customized to the user using, e.g., machine learning, and provides the customized set of HRTFs to the audio system 200.

The tracking module 260 is configured to track locations of one or more sound sources. The tracking module 260 may compare current DOA estimates and compare them with a stored history of previous DOA estimates. In some examples, the audio system 200 may recalculate DOA estimates on a periodic schedule, such as once per second, or once per millisecond. The tracking module may compare the current DOA estimates with previous DOA estimates, and in response to a change in a DOA estimate for a sound source, the tracking module 260 may determine that the sound source moved. In some examples, the tracking module 260 may detect a change in location based on visual information received from the headset or some other external source. The tracking module 260 may track the movement of one or more sound sources over time. The tracking module 260 may store values for a number of sound sources and a location of each sound source at each point in time. In response to a change in a value of the number or locations of the sound sources, the tracking module 260 may determine that a sound source moved. The tracking module 260 may calculate an estimate of the localization variance. The localization variance may be used as a confidence level for each determination of a change in movement.

The beamforming module 270 is configured to process one or more ATFs to selectively emphasize sounds from sound sources within a certain area while de-emphasizing sounds from other areas. In analyzing sounds detected by the sensor array 220, the beamforming module 270 may combine information from different acoustic sensors to emphasize sound associated from a particular region of the local area while deemphasizing sound that is from outside of the region. The beamforming module 270 may isolate an audio signal associated with sound from a particular sound source from other sound sources in the local area based on, e.g., different DOA estimates from the DOA estimation module 240 and the tracking module 260. The beamforming module 270 may thus selectively analyze discrete sound sources in the local area. In some examples, the beamforming module 270 may enhance a signal from a sound source. For example, the beamforming module 270 may apply sound filters which eliminate signals above, below, or between certain frequencies. Signal enhancement acts to enhance sounds associated with a given identified sound source relative to other sounds detected by the sensor array 220.

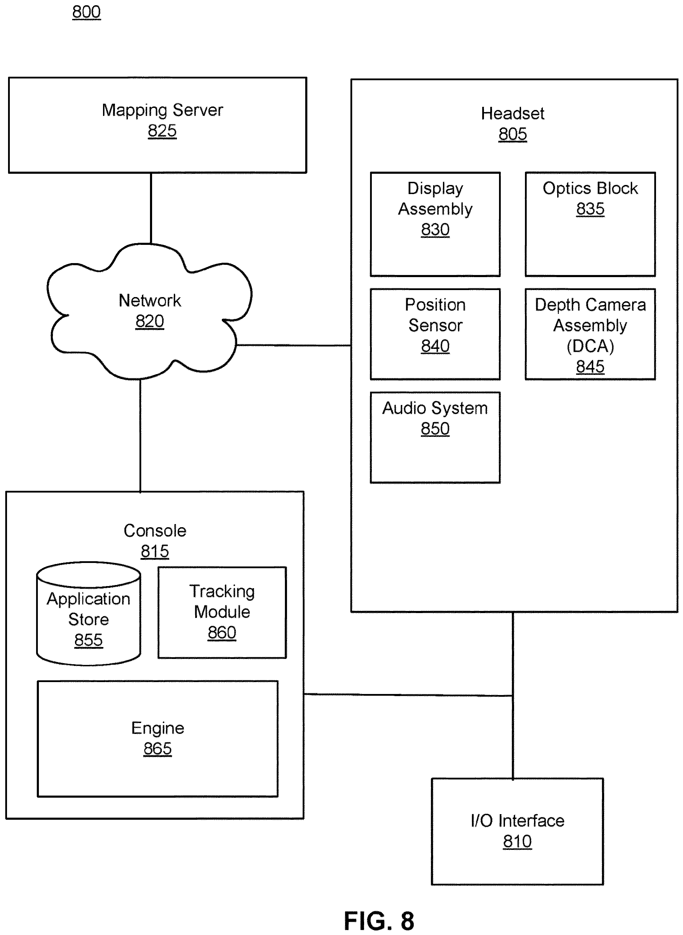

The sound filter module 280 determines sound filters for the transducer array 210. In some examples, the sound filters cause the audio content to be spatialized, such that the audio content appears to originate from a target region. The sound filter module 280 may use HRTFs and/or acoustic parameters to generate the sound filters. The acoustic parameters describe acoustic properties of the local area. The acoustic parameters may include, e.g., a reverberation time, a reverberation level, a room impulse response, etc. In some examples, the sound filter module 280 calculates one or more of the acoustic parameters. In some examples, the sound filter module 280 requests the acoustic parameters from a mapping server (e.g., as described below with regard to FIG. 8).

The sound filter module 280 provides the sound filters to the transducer array 210. In some examples, the sound filters may cause positive or negative amplification of sounds as a function of frequency.

The audio controller 230 also includes an avatar synchronization module 290 that identifies an avatar of an additional user corresponding to audio captured by the sensor array 220 and generates instructions for modifying the identified avatar based on the captured audio. As further described below in conjunction with FIGS. 4-7, the audio controller 230 identifies additional headsets 100 included in a local area with a headset 100 including the audio controller 230. The audio controller 230 also receives audio from the local area captured by the sensor array 220, and may receive information describing the local area from one or more external capturing sensors 195. Based on characteristics of the captured audio or the information describing the local area, the audio controller 230 determines whether the captured audio is associated with an additional user of an additional headset in the local area, as further described below in conjunction with FIGS. 4-7.

In some examples, the avatar synchronization module 290 applies a trained identification model to the audio captured from the local area to identify an additional user associated with the captured audio based on characteristics of the captured audio. In some examples, the trained identification model determines an embedding for the captured audio and determines a measure of similarity between the embedding for the captured audio and embeddings of audio associated with one or more additional users. The trained identification model is one or more machine learning models that are applied to the captured audio and that output a user identifier of an additional user associated with the captured audio. For example, the trained identification model is a set of weights comprising parameters used by the trained identification model to determine the user identifier of an additional user associated with the captured audio transform input data received by the model into output data. The weights may be generated through a training process, whereby the trained identification model is trained based on a set of training examples and labels associated with the training examples. A training example includes audio, or characteristics of audio, along with a label that is a user identifier associated with the audio. The training process for the trained identification model may include: applying the identification model to a training example, generating a score for the identification model by comparing an output of the identification model to the label associated with the training example, and updating weights associated for the identification model through a back-propagation process based on the score. In other examples, the trained identification model determines statistical information or other characteristics from the captured audio, and determines a user identifier of the additional user based on the statistical information or other characteristics. For example, the avatar synchronization module 290 determines a fundamental frequency of captured audio and identifies a user identifier associated with the fundamental frequency. Other characteristics, or combinations of characteristics, may be extracted or determined from captured audio and compared to information associated with user identifies to identify a user identifier associated with information matching, or having at least a threshold measure of similarity, to the characteristics determined from the captured audio. In various examples, the trained identification model is a machine-learned model, while in other examples the trained identification model uses audio identification methods based on characteristics of captured audio extracted from captured audio.

In response to determining captured audio is associated with an additional user of an additional headset 100 in the local area, the avatar synchronization module 290 identifies an avatar displayed by the headset 100 corresponding to the identified additional user and generates instructions for modifying the identified avatar. The instructions modify the identified avatar based on the captured audio in various examples. For example, the instructions modify a portion of the identified avatar to replicate movement of the additional user determined to be associated with the captured audio. The avatar synchronization module 290 determines movement of the identified avatar by applying a movement model to the captured audio, with the movement model outputting portions of the avatar to move and a type of movement for the portions of the avatar based on the captured audio, allowing the avatar to be modified to appear to generate the captured audio. In other examples, the avatar synchronization module 290 generates instructions for modifying the identified avatar based on captured information describing the local area, so movement of one or more portions of the additional user in the information describing the local area is replicated by movement of the identified avatar. Modification of an avatar corresponding to an additional user is further described below in conjunction with FIGS. 4-7.

A headset 100, as further described above in conjunction with FIG. 1A (or a headset 105 as further described above in conjunction with FIG. 1B) is worn by a user or is otherwise positioned to display content to the user via one or more display elements 120. To facilitate interaction between the user of the headset and additional users, the headset 100 is in a local area that includes one or more additional headsets 100, with each additional headset 100 associated with an additional user. In various examples, the headset 100 displays a virtual environment to the user including an avatar representing each additional user in the local area. In various examples, the virtual environment also displays avatars representing one or more additional users in a remote location that is a different physical location than the local area. For example, the local area is a room, such as a conference room or an office, in a particular physical location, while the remote area is a different room, such as another conference room or another office, in a different physical location.

To display avatars for the additional users in the local area and in the remote area, the headset 100 of the user and the additional headsets 100 of the additional users each communicate with a server or other computing device. The server receives data from a headset 100 and transmits the data to other headsets 100 for presentation. For example, the headset 100 of the user receives data identifying an additional user of an additional headset 100 and displays content to the user based on the received data. In various examples, the server maintains a list of users to exchange information with each other and transmits data received from a headset 100 of a user on the list to headsets 100 of other users on the list. A user specifies the other users on the list to regulate transmission and presentation of data to other users.

A headset 100 also captures audio from a corresponding user and transmits the captured audio to a server or other computing system for transmission to other headsets 100. When the server receives audio captured from an additional user, the server transmits the captured audio to the headset 100 of the user, which presents the audio to the user and updates the avatar corresponding to the additional user that is displayed by the headset 100. In various examples, the headset 100 modifies the additional user's avatar to appear to be synchronized with the audio from the additional user, so the avatar of the additional user appears to be speaking or otherwise generating the audio presented to the user by the headset 100. For example, the avatar of the additional user has a face, and the headset 100 updates the face of the avatar of the additional user based on the received audio, allowing the avatar of the additional user to appear to be speaking the presented audio. This allows the avatars displayed to the user to appear to provide the audio from one or more additional users presented by the headset 100 to the user.

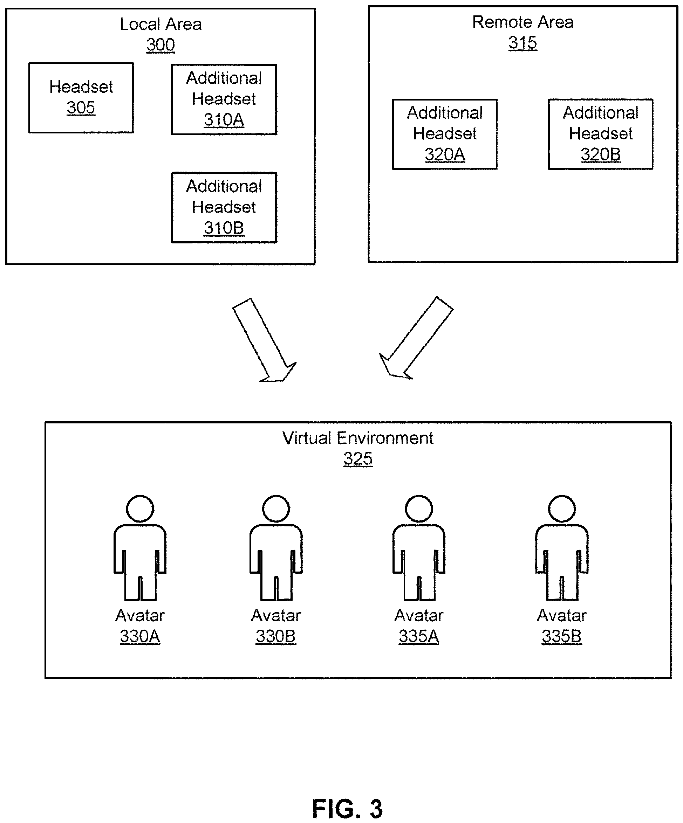

FIG. 3 shows an example virtual environment displayed to a user by a headset 100. In the example shown by FIG. 3, local area 300 includes headset 305, additional headset 310A, and additional headset 31 0B, while remote area 315 includes additional headset 320A and additional headset 320B (collectively referred to as 320). Local area 300 is in a physically different location than remote area 315. For example, local area 300 is a room in a building, while remote area 315 is a room in a different building. Headset 305 is associated with a user, while additional headset 310A is associated with an additional user and additional headset 310B is associated with an additional user. Similarly, additional headset 320A is associated with an additional user, and additional headset 320B is associated with an additional user.

To facilitate interaction between the user and the additional users, headset 305 generates and displays virtual environment 325 to the user. Virtual environment 325 includes avatars corresponding to additional users communicating with the user of headset 305. Virtual environment 325 includes avatars for users in local area 300, so in the example of FIG. 3, avatar 330A represents the additional user associated with additional headset 310A and avatar 330B represents the additional user associated with additional headset 31 0B. Virtual environment 325 also displays avatars for additional users in remote area 315. In the example of FIG. 3, avatar 335A represents the additional user associated with additional headset 320A, while avatar 335B represents the additional user associated with additional headset 320B. Hence, the virtual environment 325 includes an avatar representing each of the additional users associated with an additional headset. As further described below, the headset 305 modifies one or more of the avatars based on captured audio, allowing the virtual environment 325 to simulate interaction between the user and the additional users.

Audio from an additional user in the remote area 315 is received by a server and transmitted to headset 305 of the user in the local area 300, allowing headset 305 to synchronize modification of the avatar of the additional user based on the received audio. As headset 305 of the user receives the audio, headset 305 processes the received audio and presents the received audio as headset 305 modifies the avatar of the additional user in the remote area 315. For example, additional headset 320A captures audio from its associated additional user and transmits the audio and a user identifier of the additional user to the headset 305 of the user. For example, the additional headset 320 transmits the captured audio to a server along with the user identifier of the additional user, and the server transmits the captured audio and the user identifier of the additional user to headset 305. In response to receiving the captured audio, headset 305 modifies avatar 335A, which corresponds to the additional user associated with additional headset 320A in virtual environment 325. In various examples, one or more internal imaging devices 135 included in an additional headset 320 capture video of portions of an additional user wearing the additional headset and transmits the captured video with the captured audio. The headset 305 receives the captured video and the captured audio, and updates an avatar corresponding to the additional user based on the captured video. This allows video of operations of an additional user's face captured by one or more internal imaging devices 135 to specify how an avatar corresponding to the additional user's face is modified.

However, for additional users in the local area 300 with the user of headset 305 (e.g., the additional user associated with additional headset 310A and the additional user associated with additional headset 310B in FIG. 3) , the user of headset 305 physically hears audio from an additional user in the local area 300 before the sever receives the audio and transmits the audio to headset 305 of the user. Conventionally, headset 305 of the user modifies the avatar of an additional user in the local area 300 based on audio and data received from the server rather than audio captured in the local area 300, so the user in the local area 300 hears the audio from the additional user in the local area 300 before the avatar of the additional user in the local area 300 is modified in the virtual environment 325. For example, the user of headset 305 hears audio from an additional user of additional headset 310A in the local area 300 before additional headset 310A transmits the captured audio and user identifier of the additional user associated with additional headset 310A. This results in headset 305 modifying avatar 330A, corresponding to the additional user of additional headset 310A after the user of headset 305 has heard the audio from the additional user in the local area 300. This lack of synchronization between modification of avatar 330A in the virtual environment 325 and the user of headset 305 hearing the audio from the additional user negatively affects interaction of the user of headset 305 with the additional users through the virtual environment 325.

To reduce delay between a user hearing audio from an additional user in the local area and the user's headset 100 modifying an avatar of the additional user displayed to the user, FIG. 4 is a flowchart of a method for updating an avatar of an additional user in a local area including a user based on audio from the local area captured by the user's headset. The process shown in FIG. 4 may be performed by components of an audio system (e.g., audio system 200) of a headset 100. Other entities may perform some or all of the steps in FIG. 4 in other examples. Various examples may include different and/or additional steps, or perform the steps in different orders.

The headset 100 of the user identifies 405 one or more additional headsets 100 within a local area including the headset 100. Each additional headset 100 is associated with an additional user. For example, the headset 100 includes one or more imaging devices 130, as further described above in conjunction with FIG. 1A. An imaging device 130 captures an image of an additional headset 100 in the local area and the audio controller 150 of the headset 100 extracts an identifier of the additional headset 100 from the image. For example, the audio controller 150 extracts a QR code or other machine-readable code on which the identifier of the additional headset 100 is encoded and stores the identifier of the additional headset 100 with an indication that the additional headset 100 is in the local area. In other examples, an additional headset 100 transmits metadata including an identifier of the additional headset 100 through a communication channel, such as through a wireless network or other wireless communication channel. For example, the additional headset 100 transmits metadata to a server that transmits the metadata to the headset 100 and to additional headsets 100 identified as being in the local area by the server. As another example, the headset 100 and the one or more additional headsets 100 include wireless transceivers, so the headset 100 receives metadata transmitted by an additional headset 100 through a wireless communication channel. The metadata transmitted from an additional headset 100 includes an identifier of the local area In some examples, allowing the metadata to identify the additional headset 100 and the local area including the additional headset 100.

Various metadata may be transmitted from an additional headset 100 to the headset 100. For example, metadata includes one or more images, video captured by the additional headset 100, voice activity (or other audio) captured by the additional headset 100, or other information describing data captured by the additional headset 100. Other examples of metadata transmitted by an additional headset a position of the additional headset 100 within the local aera, a time stamp, the identifier of the local aera, the identifier of the additional headset 100, a user identifier of an additional user of the additional headset 100, or other information. In various examples, multiple types of information are included in the metadata, such as one or more combinations of the previously-identified examples.

In various examples, the audio controller 150 determines an additional user associated with an additional headset 100 identified 405 in the local area stores an association between an avatar of the additional user and the identifier of the additional headset 100. For example, the headset 100 transmits a request to the server including the identifier of the additional headset 100, obtained as further described above, and receives an identifier of the additional user from the server. In other examples, metadata the headset 100 receives from an additional headset 100 in the local area includes an identifier of the additional headset 100 and an identifier of an additional user associated with the additional headset 100. Hence, the audio controller 150 may maintain a list of additional headsets 100 included in the local area with the user and associations between additional users and the additional headsets 100 included in the local area with the headset 100.

One or more acoustic sensors 180 included in the headset 100 capture 410 audio from the local area including the headset 100. For example, the one or more acoustic sensors 180 are microphones that capture 410 audio produced by one or more sources in the local area. Example sources of audio in the local area include an additional user, a speaker, an object, a device, or another entity capable of producing audio. In various examples, different acoustic sensors 180 have different positions on the headset 100, allowing different acoustic sensors 180 to capture audio originating from different locations within the local area.

The audio controller 150 of the headset 100 determines 415 one or more characteristics of the captured audio. In various examples, the audio controller 150 determines 415 different characteristics of the captured audio. For example, the audio controller 150 determines 415 a direction of arrival of the captured audio, as further described above in conjunction with FIG. 2. Determining the direction of arrival of the captured audio allows the audio controller 150 to localize where a sound source originating the captured audio is the local area. The localization of the sound source determines where the sound source of the captured audio is relative to the headset 100. As further described above in conjunction with FIG. 2, the audio controller 150 may analyze the intensity, the spectra, or the arrival time of audio captured 410 by the one or more acoustic sensors 180 to determine 415 a direction from which the audio originated relative to the headset 100. The audio controller 150 determines 415 one or more other characteristics of the captured audio in various examples.

Based on the one or more characteristics determined 415 for the captured audio, the audio controller 150 determines 420 whether the captured audio is associated with an additional user within the local area. In an example where the audio controller 150 determines 415 a direction of arrival of the captured audio, the audio controller 150 determines 420 whether a location of the captured audio relative to the headset 100 is within a threshold distance of a location of an additional headset 100 relative to the headset 100. In various examples, the headset 100 determines the location of the additional headset 100 relative to the headset 100 based on a position of the additional headset 100 in the local area specified by metadata from the additional headset 100 and a position of the headset 100 in the local area. From the position of the headset 100 and the position of the additional headset 100, the headset 100 determines the location of the additional headset 100 relative to the headset 100 and determines 420 whether the location of the captured audio relative to the headset 100 is within the threshold distance of the location of the additional headset 100 relative to the headset 100. In response to the location of the capture audio relative to the headset 100 being within the threshold distance of the location of the additional headset 100 relative to the headset 100, the audio controller 150 determines 420 the captured audio is associated with an additional user who is associated with the additional headset 100. In other examples, the audio controller 150 determines a location in the local area of the captured audio based on its direction of arrival and determines a location of the additional headset 100 in the local area from metadata provided by the additional headset 100. In response to the location in the local area of the captured audio being within a threshold distance of the location of the additional headset 100, the audio controller 150 determines 420 the captured audio is associated with the additional user associated with the additional headset 100. In response to determining 420 the captured audio is associated with an additional user of an additional headset 100 in the local area, the audio controller 150 associates a user identifier of the additional user with the captured audio.

As another example, the audio controller 150 of the headset 100 applies a trained identification module to the captured audio. As further described above in conjunction with FIG. 2, the trained identification model outputs a user identifier associated with the captured audio based on characteristics of the captured audio. In some examples, the trained identification model is a machine-learned model that determines an embedding for the captured audio and determines a measure of similarity between the embedding for the captured audio and embeddings of audio associated with one or more additional users. In some examples, the audio controller 150 retrieves embeddings for the one or more additional users associated with additional headsets 100 identified 405 in the local area from a server or from a data store 235 of the audio controller 150. From the measures of similarity, the trained identification model determines 420 an additional user associated with the captured audio. For example, the trained identification model outputs an additional user associated with the captured audio having a maximum similarity to the captured audio. In other examples, the trained identification model determines an additional user associated with the captured audio using one or more other criteria. In other examples, the trained identification model determines statistical information or other characteristics from the captured audio, and determines a user identifier of the additional user based on the statistical information or other characteristics. For example, the audio controller 150 determines a fundamental frequency of captured audio and identifies a user identifier associated with the fundamental frequency. Other characteristics, or combinations of characteristics, may be extracted or determined from captured audio and compared to information associated with user identifies to identify a user identifier associated with information matching, or having at least a threshold measure of similarity, to the characteristics determined from the captured audio. In various examples, the trained identification model is a machine-learned model, while in other examples the trained identification model uses audio identification methods based on characteristics of captured audio extracted from captured audio.

In some examples, the trained identification model outputs a user identifier and the audio controller 150 determines 420 whether the user identifier matches a user identifier of an additional user associated with an additional headset 100- in the local area. In response to determining 420 the user identifier determined for the captured audio matches a user identifier of the additional user associated with the additional headset 100, the audio controller 150 stores an association between the user identifier of the additional user and the captured audio. Hence, the audio controller 150 leverages characteristics of captured audio in the local area to determine 420 whether the captured audio is generated by or is otherwise associated with an additional user in the local area with the headset 100.

In response to determining 420 the captured audio is associated with the additional user of the additional headset 100 in the local area, the audio controller 150 identifies 425 an avatar in a virtual environment displayed by the headset 100 that corresponds to the additional user. As further described above in conjunction with FIG. 3, one or more display elements 120 of the headset 100 display a virtual environment to the user including an avatar corresponding to different additional users in the local area and corresponding to different additional users in the remote area. Each avatar displayed in the virtual environment is associated with a user identifier of a corresponding additional user, allowing the audio controller 150 to update appearance of an avatar corresponding to an additional user when captured audio is associated with the additional user. The audio controller 150 identifies 425 an avatar associated with a user identifier matching the user identifier associated with the captured audio.

The audio controller 150 modifies 430 the identified avatar corresponding to the additional user based on the captured audio. For example, the audio controller 150 generates instructions for modifying one or more portions of the identified avatar based on the captured audio. In some examples, the audio controller 150 includes a model that is applied to the captured audio to determine movement of one or more portions of an avatar. Application of the model to the captured audio generates instructions for modifying 430 one or more portions of the identified avatar based on the audio. For example, instructions generated by the model modify one or more portions of a face of the identified avatar (or of another region of the identified avatar) based on the captured audio, so the portions of the face of the avatar move to appear to form the captured audio. By modifying 430 the identified avatar corresponding to the additional user, the audio controller 150 synchronizes movement of the identified avatar based on the captured audio. This allows movement of the avatar in the virtual environment to be synchronized with captured audio that the user of the headset 100 hears within the local area by reducing latency between movement of the avatar of the additional user and capture of the audio from the local area by the acoustic sensors 180 (with capture of the audio by the acoustic sensors 180 reflecting when the user heard the audio in the local area).

In contrast, for additional users associated with additional headsets 100 in a remote area separate from the local area, the headset 100 of the user receives audio captured by the additional headset 100 in the remote area and video captured by one or more internal imaging devices 135 of the additional headset 100 in the remote area. For example, the additional headset 100 in the remote area transmits captured audio and video captured by one or more internal imaging devices 135 of portions of the additional user's face to a sever, which transmits the captured audio and the captured video to the headset 100 of the user in the local area. The headset 100 in the local area modifies an avatar corresponding to the captured video of the additional user of the additional headset 100 in the remote area while presenting the audio captured by the additional headset 100 in the remote area.

FIG. 5 is a process flow diagram of updating an avatar of an additional user in a local area including a user based on characteristics of audio captured by a user's headset in a local area. In the example of FIG. 5, local area 300 includes headset 305, additional headset 310A, and additional headset 31 0B, while remote area 315 includes additional headset 320A and additional headset 320B. Headset 305 is associated with a user, while additional headset 310A is associated with an additional user. In local area 300, additional headset 310B is associated with an additional user. Similarly, additional headset 320A is associated with an additional user, and additional headset 320B is associated with an additional user.

As further described above in conjunction with FIG. 3, headset 305 generates and displays virtual environment 325 to the user. The virtual environment 325 includes avatars corresponding to additional users. In the example of FIG. 5, avatar 330A represents the additional user associated with additional headset 31 0A, and avatar 330B represents the additional user associated with additional headset 31 0B. Similarly, avatar 335A represents the additional user associated with additional headset 320A, while avatar 335B represents the additional user associated with additional headset 320B.

In the example of FIG. 5, headset 305 captures audio 500 from within local area 300. As further described above in conjunction with FIG. 4, one or more acoustic sensors 180 of headset 305 capture audio 500. As the user associated with headset 305 hears the audio 500 in the local area before a server or other computing system receives the audio 500 from additional headset 310B and transmits the audio 500 and instructions for updating an avatar in virtual environment 325, conventional systems result in the user of headset 305 hearing audio 500 before headset 305 receives instructions for modifying avatar 330B based on audio 500 and audio 500 for presentation.

To prevent such a delay, headset 305 determines one or more characteristics 505 of audio 500 and determines whether audio 500 is associated with an additional user associated with an additional headset 310A, 310B in local area 300 based on the characteristics 505. For purposes of illustration, audio 500 in FIG. 5 is generated by the additional user associated with additional headset 310B. As further described above in conjunction with FIG. 4, a characteristic 505 of audio 500 may be a direction of arrival of the audio 500. The direction of arrival indicates a location of the audio 500 relative to headset 305, and the headset 305 determines the audio 500 is associated with the additional user associated with additional headset 310B in response to the location of the audio 500 being within a threshold distance of a location of additional headset 310B relative to headset 305. The location of additional headset 310B relative to headset 305 may be determined based on metadata that headset 305 receives from additional headset 310B or receives from a server that identifies additional headset 310B. As another example, headset 305 applies a trained identification model to audio 500 that outputs a user identifier determined from characteristics of audio 500, as further described above in conjunction with FIGS. 2 and 3. In the example of FIG. 5, headset 305 determines audio 500 is associated with additional user 510, who is associated with additional headset 310B based on the characteristics 505 of the audio 500.

To account for perception of audio 500 by the user of headset 305 while the virtual environment 325 is displayed, headset 305 identifies avatar 330B, which corresponds to additional user 510. Headset 305 modifies avatar 330B based on audio 500 captured by headset 305, so one or more portions of avatar 330B move based on audio 500. This allows movement of avatar 330B to appear to be synchronized with the audio 500 heard by the user of headset 305 within local area by removing a delay between the user of headset 305 hearing audio 500 and the modification of the avatar 330B of the additional user in virtual environment 325 introduced when the audio 500 is communicated to a server that identifies the additional user and determines which avatar to update based on the audio. In various examples, avatar 330B is modified to replicate movement of additional user 510 that produced audio 500.

While FIGS. 4 and 5 describe a headset 100 of a user leveraging characteristics of audio the headset 100 captured in a local area to determine modification of an avatar based on the captured audio, in other examples, the headset 100 determines modification of the avatar based on information about the local area captured by other sensors. FIG. 6 is a flowchart of a method for a user's headset updating an avatar of an additional user in a local area including a user based on information about the local area obtained by the user's headset. The method shown in FIG. 6 may be performed by components of an audio system (e.g., audio system 200). Other entities may perform some or all of the steps in FIG. 6 in other examples. Examples may include different and/or additional steps, or perform the steps in different orders.

The headset 100 of the user identifies 605 one or more additional headsets within the local area. As further described above in conjunction with FIG. 4, In some examples, an imaging device 130 included in the headset 100 captures an image of an additional headset 100 in the local area and the audio controller 150 (or other component of the headset 100) extracts an identifier of the additional headset 100 from the image. For example, the audio controller 150 extracts a QR code or other machine-readable code on which the identifier of the additional headset 100 is encoded and stores the identifier of the additional headset 100 with an indication that the additional headset 100 is in the local area. In other examples, an additional headset 100 transmits metadata including an identifier of the additional headset 100 through a communication channel, such as through a wireless network or other wireless communication channel, as further described above in conjunction with FIG. 4. For example, the additional headset 100 transmits metadata to a server that transmits the metadata to the headset 100 and to additional headsets 100 identified as being in the local area by the server. The metadata transmitted from an additional headset 100 includes an identifier of the local area In some examples, allowing the metadata to identify the additional headset 100 and the local area including the additional headset 100.

In various examples, the audio controller 150 determines an additional user associated with an additional headset 100 identified 605 in the local area and stores an association between an avatar of the additional user and the identifier of the additional headset 100, as further described above in conjunction with FIG. 4. For example, the headset 100 transmits a request to the server including the identifier of the additional headset 100, obtained as further described above, and receives an identifier of the additional user from the server. In other examples, metadata the headset 100 receives from an additional headset 100 in the local area includes an identifier of the additional headset 100 and an identifier of an additional user associated with the additional headset 100.

One or more acoustic sensors 180 included in the headset 100 capture 610 audio from the local area including the headset 100. For example, the one or more acoustic sensors 180 are microphones that capture 610 audio produced by one or more sources in the local area, as further described above in conjunction with FIG. 4. In various examples, different acoustic sensors 180 have different positions on the headset 100, allowing different acoustic sensors 180 to capture audio from different locations within the local area including the headset 100.

In addition to the one or more acoustic sensors 180, the headset 100 includes one or more external capturing sensors 195, as further described above in conjunction with FIG. 1A. An external capturing sensor 195 is configured to capture information describing a local area surrounding the headset 100. Example external capturing sensors 195 include an imaging device 130, a depth camera assembly, a passive camera assembly, an ultrasonic sensor, an infrared sensor, or another sensor configured to capture data from the local area surrounding the headset 100. In various examples, the headset 100 includes different types of external capturing sensors 195, with each external capturing sensor 195 capturing a different type of information describing the local area.

Alternatively or additionally, the local area includes one or more external capturing sensors 195 that are separate from the headset 100 and from the one or more additional headsets 100. An external capturing sensor 195 separate from the headset 100 and from the additional headsets 100 is configured to communicate with each headset 100 included in the local area. For example, one or more imaging devices are positioned within the local area and capture video of the local area. In various examples, different imaging devices in the local area have different fields of view, so different imaging devices capture video of different regions of the local area. As another example, one or more ultrasonic sensors are positioned in the local area, with each ultrasonic sensor capturing reflections of ultrasonic waves from different regions of the local area. As another example, an external capturing sensor 195 is one or more acoustic sensors (e.g., microphones) that are separate from the headsets 100 in the local area and external to the headsets 100 in the local area. In examples where the external capturing sensor 195 is one or more acoustic sensors separate from the headsets 100 in the local area, the headset 100 may use audio captured by the separate one or more acoustic sensors, audio captured by acoustic sensors 180 of the headset 100, or a combination of audio captured by the separate one or more headsets 100 and by the acoustics sensors 180 of the headset to identify audio characteristics of audio captured from the local area, as further described above in conjunction with FIG. 4. In various examples, the headset 100 and one or more additional headsets 100 included in the local area establish a communication channel with the external capturing sensors 195, which transmit captured information describing the local area to the headset 100 or to the one or more additional headsets 100 via a communication channel. For example, the headset 100, or the additional headsets 100, and an external capturing sensor 195 separate from a headset 100 and from the additional headsets 100 exchange information through a wireless communication channel in the local area.

The one or more external capturing sensors 195 capture 615 information describing the local area that is obtained by the headset 100 of the user. For example, an external capturing sensor 195 is included in the headset 100 and captures 615 video of the local area. As another example, an external capturing sensor 195 is separate from the headset 100 and captures 615 video or other information of the local area. The external capturing sensor 195 separate from the headset 100 communicates the captured 615 information of the local area to the headset 100 of the user through a communication channel, such as a wireless network. The headset 100 of the user may receive information describing the local area from multiple external capturing sensors 195. In some examples, the headset 100 of the user receives information describing the local area from one or more external capturing sensors 195 separate from the headset and from one or more external capturing sensors 195 included in the headset 100.

The audio controller 150, or another component of the headset 100 of the user, extracts 620 one or more characteristics of the local area from the captured information describing the local area. One or more of the extracted characteristics identify one or more additional users in the local area. In various examples, characteristics extracted 620 from the information describing the local area include identifiers of additional users included in the local area. For example, the audio controller 150 applies one or more facial recognition methods to video of the local area from an external capturing sensor 195 to determine whether the video includes one or more additional users. A facial recognition method outputs an identifier of an additional user identified in the video, allowing the audio controller 150 to identify additional users included in the local area from the information from an external capturing sensor 195. In other examples, the audio controller 150 applies one or more identification methods to captured video or other information describing the local area, with an identification method outputting an identifier of an additional user included in the video or other information. Other methods may be applied to the information describing the local area to extract 620 characteristics capable of identifying one or more additional users included in the local area. The audio controller 150 stores identifiers of additional users included in the local area identified based on the characteristics extracted 620 from the information describing the local area.

Additionally, one or more characteristics extracted 620 from the information describing the local area indicate whether an additional user identified from the information describing the local area is speaking or is performing one or more specific movements. For example, one or more extracted characteristics determine whether one or more portions of an identified additional user are associated with speech are moving. The audio controller 150 uses the extracted characteristics from the information describing the local area to determine 625 whether the captured audio is associated with an additional user in the local area. As an example, one or more extracted characteristics indicate whether the additional user's lips are moving. An indication that the additional user's lips are moving may be associated with a timestamp when movement of the additional user's lips was identified. In response to the timestamp of an indication that the additional user's lips are moving (or other movement by the additional user indicating the additional user is speaking) matching time when the headset 100 captured 610 audio in the local area, the audio controller 150 determines 625 the identified additional user is associated with the captured audio. For example, the audio controller 150 associates the captured audio with an identifier of the additional user identified from the information describing the local area as performing a movement indicative of speaking when the audio was captured 610. This allows the audio controller 150 to leverage information describing the local area captured 615 by one or more external capturing sensors 195 to determine 625 whether captured audio is associated with an additional user in the local area.

In response to determining 625 the captured audio is associated with an additional user in the local area, the audio controller 150 identifies 630 an avatar corresponding to the additional user, as further described above in conjunction with FIG 4. In various examples, the audio controller 150 identifies 630 an avatar corresponding to a user identifier associated with the captured audio based on the characteristics extracted 620 from the information describing the local area. The audio controller 150 modifies 635 the identified avatar corresponding to the additional user based on the captured audio, as further described above in conjunction with FIG. 4. For example, the audio controller 150 generates instructions for modifying one or more portions of the identified avatar based on the captured audio.

In various examples, the audio controller 150 generates instructions for modifying 635 the identified avatar based on one or more characteristics of the additional user extracted 620 from the information describing the local area. For example, the audio controller 150 identifies the additional user associated with the captured audio from the information describing the local area captured 615 by an external capturing sensor 195. From the information describing the local area, the audio controller 150 determines a facial expression, or a sequence of facial expressions, of the identified additional user. The audio controller 150 generates instructions for modifying 635 the identified avatar based on the facial expression, or facial expressions, determined for the additional user. This allows the audio controller 150 to modify 635 the identified avatar corresponding to the additional user to replicate a facial expression of the additional user based on the captured information describing the local area. Thus, the avatar corresponding to the additional user is modified 635 so the avatar appears to be synchronized with the audio from the local area that the headset captured 610. In other examples, the audio controller 150 a model to the captured audio to determine movement of one or more portions of an avatar. The model generates instructions for modifying 635 one or more portions of the identified avatar based on the audio, as further described above in conjunction with FIG. 4.

In various examples, to further reduce latency a time when the user of the headset 100 hears the captured audio from the additional user in the local area and modification of the avatar corresponding to the identified additional user, the headset 100 and the additional headsets 100 in the local area exchange data using a local communication channel. The local communication channel is established and maintained by devices in the local area or within a threshold distance of the local area. For example, the headset 100 and the additional headsets 100 in the local area exchange data using a local network, such as a local area network or a wireless network established and provided by a system or by devices within a threshold distance of the local area. In various examples, a different network or a different communication channel is used by the headset 100 to exchange data with a server or with additional headsets 100 in the remote area, with the local communication channel having a lower latency than the different communication channel. In some examples, the headset and the additional headsets 100 exchange data using the local network in response to the local network having less than a threshold latency or in response to the local network having a latency within a specific range.

As further described above in conjunction with FIG. 4, for additional users associated with additional headsets 100 in the remote area, the headset 100 of the user receives audio captured by the additional headset 100 in the remote area and video captured by one or more internal imaging devices 135 of the additional headset 100 in the remote area. The headset 100 in the local area modifies an avatar corresponding to the captured video of the additional user of the additional headset 100 in the remote area while presenting the audio captured by the additional headset 100 in the remote area. Thus, for additional users for whom the user of the headset 100 is unable to hear audio through the air, the headset 100 receives audio captured by an additional headset 100 and video of movement of an additional user's face and presents the received audio while modifying an avatar corresponding to the additional user based on the received video.

FIG. 7 is a process flow diagram of updating an avatar of an additional user in a local area including a user based on characteristics of information describing a local area captured by an external capturing sensor 195 in the local area. In the example of FIG. 7, local area 300 includes headset 305, additional headset 310A, and additional headset 310B, while remote area 315 includes additional headset 320A and additional headset 320B. Headset 305 is associated with a user, while additional headset 310A is associated with an additional user and additional headset 310B is associated with an additional user. Similarly, additional headset 320A is associated with an additional user, and additional headset 320B is associated with an additional user.

As shown in FIG. 7, local area 300 also includes an external capturing sensor 700 that is separate from headset 305 and is separate from additional headsets 310A, 310B. The external capturing sensor 700 captures information 705 describing local area 300. In some examples, external capturing sensor 700 is an image capture device capturing video of a portion of local area 300 within a field of view of the image capture device. In other examples, the external capturing sensor 700 is an ultrasonic sensor, an infrared sensor, or other type of sensor capturing information 705 describing local area 300, such as additional users, objects, or other entities in local area 300. The external capturing sensor 700 communicates the captured information 705 describing local area to headset 305 and to additional headsets 310A, 310B through a communication channel, such as a wireless network. Further, In some examples, the external capturing sensor 700 comprises one or more microphones that are external to and separate from headset 305 and additional headsets 310A, 310B. In some examples, headset 305 and additional headsets 310A, 310B also or alternatively include external capturing sensors 195 that capture information describing local area 300. In various examples, an external capturing sensor 700 determines characteristics of audio captured from the local area, as further described above in conjunction with FIG. 4 or extracts characteristics of an additional user from information describing the local area as further described above in conjunction with FIG. 6. In some examples, the external capturing sensor 700 identifies an avatar corresponding to an additional user to modify based on the characteristics of the captured audio of the information describing the local area, as further described above in conjunction with FIGS. 4 and 6, and transmits information identifying the identified user to headset 305.

As further described above in conjunction with FIGS. 3 and 5, headset 305 generates and displays virtual environment 325 to the user, which includes avatars corresponding to additional users. In the example of FIG. 7, avatar 330A represents the additional user associated with additional headset 310A and avatar 330B represents the additional user associated with additional headset 310B. Similarly, avatar 335A represents the additional user associated with additional headset 320A, while avatar 335B represents the additional user associated with additional headset 320B.

Headset 305 captures audio 710 from within local area 300. As further described above in conjunction with FIG. 4, one or more acoustic sensors 180 of headset 305 capture audio 710. To prevent a delay between the user of headset 305 hearing audio 710 within local area 300 and an avatar corresponding to the additional user of an additional headset 310A, 310B who generated audio 710, headset 305 determines one or more characteristics 715 of local area 300 from the information 705 describing local area 300 captured by the external capturing sensor 700. In the example of FIG. 7, the one or more characteristics 715 include characteristics of additional user 510, who is associated with additional headset 310B. For example, headset 305 identifies additional user 510 from application of a trained model to the information 705 describing local area 300. The trained model outputs an identifier of additional user 510 in response to determining characteristics 715 match characteristics of additional user 510. In response to one or more characteristics 715 extracted from the information 705 describing local area 300 indicating movement of a portion of additional user 510 during times when audio 710 is captured, headset 305 determines audio 710 is associated with additional user 510. In the example of FIG. 7, headset 305 determines audio 710 is associated with additional user 510 based on the characteristics 715 extracted from the information 705 describing local area 300.

To account for perception of audio 710 by the user of headset 305 from local area 300 when displaying the virtual environment 325 to the user of headset 305, headset 305 identifies avatar 330B, which corresponds to additional user 510. Based on the captured audio 710, headset 305 modifies avatar 330B so one or more portions of avatar 330B move based on the audio 710. In various examples, headset 305 determines movement of one or more portions of additional user 510 from the information 705 describing local area 300 and modifies avatar 330B to replicate the determined movement from the information 705 describing local area 300. This allows movement of avatar 330B to appear to be synchronized with the audio 710 heard by the user of headset 305 within local area, and for portions of avatar 330B to replicate movement of portions of additional user 510, by removing a delay between the user of headset 305 hearing audio 710 within the local area 300 and headset 305 receiving instructions for modifying avatar 330B from a server that receives the audio 710 from an additional headset 310A, 310B.

FIG. 8 is a system 800 that includes a headset 805. In some examples, the headset 805 may be the headset 100 of FIG. 1A or the headset 105 of FIG. 1B. The system 800 may operate in an artificial reality environment (e.g., a virtual reality environment, an augmented reality environment, a mixed reality environment, or some combination thereof). The system 800 shown by FIG. 8 includes the headset 805, an input/output (I/O) interface 810 that is coupled to a console 815, the network 820, and the mapping server 825. While FIG. 8 shows an example system 800 including one headset 805 and one I/O interface 810, in other examples any number of these components may be included in the system 800. For example, there may be multiple headsets each having an associated I/O interface 810, with each headset and I/O interface 810 communicating with the console 815. In alternative configurations, different and/or additional components may be included in the system 800. Additionally, functionality described in conjunction with one or more of the components shown in FIG. 8 may be distributed among the components in a different manner than described in conjunction with FIG. 8 in some examples. For example, some or all of the functionality of the console 815 may be provided by the headset 805.

The headset 805 includes the display assembly 830, an optics block 835, one or more position sensors 840, and the DCA 845. Some examples of headset 805 have different components than those described in conjunction with FIG. 8. Additionally, the functionality provided by various components described in conjunction with FIG. 8 may be differently distributed among the components of the headset 805 in other examples, or be captured in separate assemblies remote from the headset 805.

The display assembly 830 displays content to the user in accordance with data received from the console 815. The display assembly 830 displays the content using one or more display elements (e.g., the display elements 120). A display element may be, e.g., an electronic display. In various examples, the display assembly 830 comprises a single display element or multiple display elements (e.g., a display for each eye of a user). Examples of an electronic display include: a liquid crystal display (LCD), an organic light emitting diode (OLED) display, an active-matrix organic light-emitting diode display (AMOLED), a waveguide display, some other display, or some combination thereof. Note In some examples, the display element 120 may also include some or all of the functionality of the optics block 835.

The optics block 835 may magnify image light received from the electronic display, corrects optical errors associated with the image light, and present the corrected image light to one or both eyeboxes of the headset 805. In various examples, the optics block 835 includes one or more optical elements. Example optical elements included in the optics block 835 include: an aperture, a Fresnel lens, a convex lens, a concave lens, a filter, a reflecting surface, or any other suitable optical element that affects image light. Moreover, the optics block 835 may include combinations of different optical elements. In some examples, one or more of the optical elements in the optics block 835 may have one or more coatings, such as partially reflective or anti-reflective coatings.

Magnification and focusing of the image light by the optics block 835 allows the electronic display to be physically smaller, weigh less, and consume less power than larger displays. Additionally, magnification may increase the field of view of the content presented by the electronic display. For example, the field of view of the displayed content is such that the displayed content is presented using almost all (e.g., approximately 110 degrees diagonal), and in some cases, all of the user's field of view. Additionally, In some examples, the amount of magnification may be adjusted by adding or removing optical elements.

In some examples, the optics block 835 may be designed to correct one or more types of optical error. Examples of optical error include barrel or pincushion distortion, longitudinal chromatic aberrations, or transverse chromatic aberrations. Other types of optical errors may further include spherical aberrations, chromatic aberrations, or errors due to the lens field curvature, astigmatisms, or any other type of optical error. In some examples, content provided to the electronic display for display is pre-distorted, and the optics block 835 corrects the distortion when it receives image light from the electronic display generated based on the content.

The position sensor 840 is an electronic device that generates data indicating a position of the headset 805. The position sensor 840 generates one or more measurement signals in response to motion of the headset 805. The position sensor 190 is an example of the position sensor 840. Examples of a position sensor 840 include: one or more IMUs, one or more accelerometers, one or more gyroscopes, one or more magnetometers, another suitable type of sensor that detects motion, or some combination thereof. The position sensor 840 may include multiple accelerometers to measure translational motion (forward/back, up/down, left/right) and multiple gyroscopes to measure rotational motion (e.g., pitch, yaw, roll). In some examples, an IMU rapidly samples the measurement signals and calculates the estimated position of the headset 805 from the sampled data. For example, the IMU integrates the measurement signals received from the accelerometers over time to estimate a velocity vector and integrates the velocity vector over time to determine an estimated position of a reference point on the headset 805. The reference point is a point that may be used to describe the position of the headset 805. While the reference point may generally be defined as a point in space, however, in practice the reference point is defined as a point within the headset 805.

The DCA 845 generates depth information for a portion of the local area. The DCA includes one or more imaging devices and a DCA controller. The DCA 845 may also include an illuminator. Operation and structure of the DCA 845 is described above with regard to FIG. 1A.

The audio system 850 provides audio content to a user of the headset 805. The audio system 850 is substantially the same as the audio system 200 described above. The audio system 850 may comprise one or acoustic sensors, one or more transducers, and an audio controller. The audio system 850 may provide spatialized audio content to the user. In some examples, the audio system 850 may request acoustic parameters from the mapping server 825 over the network 820. The acoustic parameters describe one or more acoustic properties (e.g., room impulse response, a reverberation time, a reverberation level, etc.) of the local area. The audio system 850 may provide information describing at least a portion of the local area from e.g., the DCA 845 and/or location information for the headset 805 from the position sensor 840. The audio system 850 may generate one or more sound filters using one or more of the acoustic parameters received from the mapping server 825, and use the sound filters to provide audio content to the user.

As further described above in conjunction with FIGS. 4-7, the audio system 850 receives audio captured by the headset 805 from a local area surrounding the headset 805 and determines an avatar displayed in a virtual environment to modify based on the captured audio. For example, the audio system 850 identifies additional headsets included in the local area, as further described above in conjunction with FIGS. 4-7. The audio system 850 extracts characteristics of the captured audio from the local area and determines whether the characteristics indicate the captured audio originates from an additional headset in the local area in some examples. The audio system 850 generates instructions for modifying an avatar displayed by the display assembly 830 that corresponds to an additional user associated with an additional headset from which the audio system 850 determines the audio originated, as further described above in conjunction with FIGS. 4 and 5. Alternatively or additionally, the audio system 850 extracts characteristics of the local area captured by one or more external capturing sensors 195 and identifies one or more additional users in the local area from the extracted characteristics. In response to determining the extracted characteristics indicate an additional user was performing one or more actions while the audio was captured, the audio system 850 generates instructions for modifying an avatar corresponding to the additional user that is displayed by the display assembly 830, as further described above in conjunction with FIGS. 6 and 7.

The I/O interface 810 is a device that allows a user to send action requests and receive responses from the console 815. An action request is a request to perform a particular action. For example, an action request may be an instruction to start or end capture of image or video data, or an instruction to perform a particular action within an application. The I/O interface 810 may include one or more input devices. Example input devices include: a keyboard, a mouse, a game controller, or any other suitable device for receiving action requests and communicating the action requests to the console 815. An action request received by the I/O interface 810 is communicated to the console 815, which performs an action corresponding to the action request. In some examples, the I/O interface 810 includes an IMU that captures calibration data indicating an estimated position of the I/O interface 810 relative to an initial position of the I/O interface 810. In some examples, the I/O interface 810 may provide haptic feedback to the user in accordance with instructions received from the console 815. For example, haptic feedback is provided when an action request is received, or the console 815 communicates instructions to the I/O interface 810 causing the I/O interface 810 to generate haptic feedback when the console 815 performs an action.

The console 815 provides content to the headset 805 for processing in accordance with information received from one or more of: the DCA 845, the headset 805, and the I/O interface 810. In the example shown in FIG. 8, the console 815 includes an application store 855, a tracking module 860, and an engine 865. Some examples of the console 815 have different modules or components than those described in conjunction with FIG. 8. Similarly, the functions further described below may be distributed among components of the console 815 in a different manner than described in conjunction with FIG. 8. In some examples, the functionality discussed herein with respect to the console 815 may be implemented in the headset 805, or a remote system.

The application store 855 stores one or more applications for execution by the console 815. An application is a group of instructions, that when executed by a processor, generates content for presentation to the user. Content generated by an application may be in response to inputs received from the user via movement of the headset 805 or the I/O interface 810. Examples of applications include: gaming applications, conferencing applications, video playback applications, or other suitable applications.

The tracking module 860 tracks movements of the headset 805 or of the I/O interface 810 using information from the DCA 845, the one or more position sensors 840, or some combination thereof. For example, the tracking module 860 determines a position of a reference point of the headset 805 in a mapping of a local area based on information from the headset 805. The tracking module 860 may also determine positions of an object or virtual object. Additionally, In some examples, the tracking module 860 may use portions of data indicating a position of the headset 805 from the position sensor 840 as well as representations of the local area from the DCA 845 to predict a future location of the headset 805. The tracking module 860 provides the estimated or predicted future position of the headset 805 or the I/O interface 810 to the engine 865.

The engine 865 executes applications and receives position information, acceleration information, velocity information, predicted future positions, or some combination thereof, of the headset 805 from the tracking module 860. Based on the received information, the engine 865 determines content to provide to the headset 805 for presentation to the user. For example, if the received information indicates that the user has looked to the left, the engine 865 generates content for the headset 805 that mirrors the user's movement in a virtual local area or in a local area augmenting the local area with additional content. Additionally, the engine 865 performs an action within an application executing on the console 815 in response to an action request received from the I/O interface 810 and provides feedback to the user that the action was performed. The provided feedback may be visual or audible feedback via the headset 805 or haptic feedback via the I/O interface 810.

The network 820 couples the headset 805 and/or the console 815 to the mapping server 825. The network 820 may include any combination of local area and/or wide area networks using both wireless and/or wired communication systems. For example, the network 820 may include the Internet, as well as mobile telephone networks. In one example, the network 820 uses standard communications technologies and/or protocols. Hence, the network 820 may include links using technologies such as Ethernet, 802.11, worldwide interoperability for microwave access (WiMAX), 2G/3G/4G/5G mobile communications protocols, digital subscriber line (DSL), asynchronous transfer mode (ATM), InfiniBand, PCI Express Advanced Switching, etc. Similarly, the networking protocols used on the network 820 can include multiprotocol label switching (MPLS), the transmission control protocol/Internet protocol (TCP/IP), the User Datagram Protocol (UDP), the hypertext transport protocol (HTTP), the simple mail transfer protocol (SMTP), the file transfer protocol (FTP), etc. The data exchanged over the network 820 can be represented using technologies and/or formats including image data in binary form (e.g., Portable Network Graphics (PNG)), hypertext markup language (HTML), extensible markup language (XML), etc. In addition, all or some of links can be encrypted using conventional encryption technologies such as secure sockets layer (SSL), transport layer security (TLS), virtual private networks (VPNs), Internet Protocol security (IPsec), etc.

The mapping server 825 may include a database that stores a virtual model describing a plurality of spaces, wherein one location in the virtual model corresponds to a current configuration of a local area of the headset 805. The mapping server 825 receives, from the headset 805 via the network 820, information describing at least a portion of the local area and/or location information for the local area. The user may adjust privacy settings to allow or prevent the headset 805 from transmitting information to the mapping server 825. The mapping server 825 determines, based on the received information and/or location information, a location in the virtual model that is associated with the local area of the headset 805. The mapping server 825 determines (e.g., retrieves) one or more acoustic parameters associated with the local area, based in part on the determined location in the virtual model and any acoustic parameters associated with the determined location. The mapping server 825 may transmit the location of the local area and any values of acoustic parameters associated with the local area to the headset 805.

One or more components of system 800 may contain a privacy module that stores one or more privacy settings for user data elements. The user data elements describe the user or the headset 805. For example, the user data elements may describe a physical characteristic of the user, an action performed by the user, a location of the user of the headset 805, a location of the headset 805, an HRTF for the user, etc. Privacy settings (or "access settings") for a user data element may be stored in any suitable manner, such as, for example, in association with the user data element, in an index on an authorization server, in another suitable manner, or any suitable combination thereof.

A privacy setting for a user data element specifies how the user data element (or particular information associated with the user data element) can be accessed, stored, or otherwise used (e.g., viewed, shared, modified, copied, executed, surfaced, or identified). In some examples, the privacy settings for a user data element may specify a "blocked list" of entities that may not access certain information associated with the user data element. The privacy settings associated with the user data element may specify any suitable granularity of permitted access or denial of access. For example, some entities may have permission to see that a specific user data element exists, some entities may have permission to view the content of the specific user data element, and some entities may have permission to modify the specific user data element. The privacy settings may allow the user to allow other entities to access or store user data elements for a finite period of time.

The privacy settings may allow a user to specify one or more geographic locations from which user data elements can be accessed. Access or denial of access to the user data elements may depend on the geographic location of an entity who is attempting to access the user data elements. For example, the user may allow access to a user data element and specify that the user data element is accessible to an entity only while the user is in a particular location. If the user leaves the particular location, the user data element may no longer be accessible to the entity. As another example, the user may specify that a user data element is accessible only to entities within a threshold distance from the user, such as another user of a headset within the same local area as the user. If the user subsequently changes location, the entity with access to the user data element may lose access, while a new group of entities may gain access as they come within the threshold distance of the user.

The system 800 may include one or more authorization/privacy servers for enforcing privacy settings. A request from an entity for a particular user data element may identify the entity associated with the request and the user data element may be sent only to the entity if the authorization server determines that the entity is authorized to access the user data element based on the privacy settings associated with the user data element. If the requesting entity is not authorized to access the user data element, the authorization server may prevent the requested user data element from being retrieved or may prevent the requested user data element from being sent to the entity. Although this disclosure describes enforcing privacy settings in a particular manner, this disclosure contemplates enforcing privacy settings in any suitable manner.

The foregoing description of the examples has been presented for illustration; it is not intended to be exhaustive or to limit the patent rights to the precise forms disclosed. Persons skilled in the relevant art can appreciate that many modifications and variations are possible considering the above disclosure.

Some portions of this description describe the examples in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one example, a software module is implemented with a computer program product comprising a computer-readable medium containing computer program code, which can be executed by a computer processor for performing any or all the steps, operations, or processes described.

Examples may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Examples may also relate to a product that is produced by a computing process described herein. Such a product may comprise information resulting from a computing process, where the information is stored on a non-transitory, tangible computer readable storage medium and may include any example of a computer program product or other data combination described herein.

Finally, the language used in the specification has been principally selected for readability and instructional purposes, and it may not have been selected to delineate or circumscribe the patent rights. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A method comprising:
identifying, by a headset of a user, an additional headset of an additional user within a local area including the headset;
capturing audio from the local area by an audio system of the headset;
determining one or more characteristics of the captured audio by the headset;
determining the captured audio is associated with the additional user based on the one or more characteristics of the captured audio;
identifying an avatar corresponding to the additional user in a virtual environment displayed by the headset to the user; and
modifying the avatar corresponding to the additional user based on the captured audio.

2. The method of claim 1, wherein determining one or more characteristics of the captured audio by the headset comprises:
determining a direction of arrival of the captured audio.

3. The method of claim 2, wherein determining the captured audio is associated with the additional user based on the one or more characteristics of the captured audio comprises:
determining the direction of arrival of the captured audio is within a threshold distance of a location of the additional headset in the local area.

4. The method of claim 3, wherein the location of the additional headset in the local area is determined from metadata the headset receives from the additional headset.

5. The method of any preceding claim, wherein determining one or more characteristics of the captured audio by the headset comprises:
applying a trained identification model to the captured audio, the trained identification model determining a user identifier for the captured audio.

6. The method of claim 5, wherein determining the captured audio is associated with the additional user based on the one or more characteristics of the captured audio comprises:
determining the user identifier for the captured audio matches a user identifier of the additional user.

7. The method of claim 6, wherein the user identifier of the additional user is included in metadata the headset receives from the additional headset.

8. A method comprising:
identifying, by a headset of a user, an additional headset of an additional user within a local area including the headset;
capturing audio from the local area by an audio system of the headset;
capturing information describing the local area by one or more external capturing sensors included in local area;
extracting characteristics of the additional user from the information describing the local area;
identifying an avatar corresponding to the additional user in a virtual environment displayed by the headset to the user; and
modifying the avatar corresponding to the additional user based on the extracted characteristics of the additional user and the captured audio.

9. The method of claim 8, wherein capturing information describing the local area by one or more external capturing sensors included in local area comprises:
capturing video of the local area including the additional user from one or more cameras included in the headset.

10. The method of claim 9, wherein extracting characteristics of the additional user from the information describing the local area comprises:
identifying the additional user in the captured video; and
determining a facial expression of the additional user from the captured video;
preferably wherein modifying the avatar corresponding to the additional user based on the extracted characteristics of the additional user and the captured audio comprises:
modifying the avatar corresponding to the additional user to replicate the facial expression of the additional user determined from the captured video.

11. The method of any of claims 8 to 10, wherein capturing information describing the local area by one or more external capturing sensors included in local area comprises:
capturing video of the local area including the additional user by one or more cameras included in the local area and external to the headset of the user;
preferably wherein extracting characteristics of the additional user from the information describing the local area comprises:
determining the additional user is included in the captured video; and
determining a facial expression of the additional user from the captured video.

12. The method of claim 9 or 10, or claim 11 when dependent on claim 9, wherein an external capturing sensor is selected from a group consisting of: a camera included on the headset, a depth camera assembly included on the headset, an ultrasonic sensor included on the headset, an infrared sensor included on the headset, and any combination thereof.

13. The method of claim 9, 10 or 12, or claim 11 when dependent on claim 9,
wherein an external capturing sensor is selected from a group consisting of: a camera external to headset, a depth camera assembly external to the headset, an ultrasonic sensor external to the headset, an infrared sensor external to the headset, one or more acoustic sensors external to the headset, and any combination thereof.

14. A headset comprising:
a frame;
one or more display elements coupled to the frame, each display element configured to generate image light displaying one or more avatars of other users to a user;
one or more acoustic sensors arranged to capture audio from a local area surrounding the headset; and
an audio controller including a processor and a non-transitory computer readable storage medium having instructions encoded thereon that, when executed by the processor, cause the processor to carry out the method of any preceding claim.

15. The headset of claim 14, wherein the headset communicates with the additional headset through a local communication channel and communicates with one or more remote devices through a different communication channel, the local communication channel having a lower latency than the different communication channel.
